# EUROPEAN PATENT SPECIFICATION

(11) **EP 3 280 573 B1**
(45) Date of publication and mention of the grant of the patent: **29.05.2024**
(21) Application number: 16777089.0
(22) Date of filing: 01.04.2016
(51) Int. Cl.: B26D 3/28, A23N 15/00, A47J 43/28, B26B 3/03, B26D 1/02, B26D 1/03

(54) **MANDOLINE SLICER**
GEMÜSEHOBEL
TRANCHEUSE MANDOLINE

(30) Priority: 06.04.2015 US 201514679373
(43) Date of publication of application: 14.02.2018
(73) Proprietor: Progressive International Corporation, Kent, WA 98032-2358 (US)
(72) Inventor: STEWART, Joshua, Seattle, WA 98125 (US); BAGLEY, Justin, Seattle, WA 98178 (US); KAPOSI, Sascha, Tacoma, WA 98406 (US); HAUSER, Lawrence, M., Auburn, WA 98001 (US)
(74) Representative: Mewburn Ellis LLP
(86) International application number: PCT/US2016/025625
(87) International publication number: WO 2016/164273

(56) References cited:
- US-A- 3 495 639
- US-A1- 2011 067 545
- US-A1- 2011 094 111
- US-A1- 2011 094 111
- US-A1- 2014 331 844
- US-A1- 2014 331 844

## Description

### PRIORITY CLAIM

### FIELD OF THE INVENTION

This invention generally relates to mandoline-type slicing devices.

### BACKGROUND OF THE INVENTION

Mandoline slicers have been in use for many years, but existing slicers are lacking in one respect or another. Many have slicing guards that are difficult to use or which do not readily follow the path of the slicing tray, leading users to omit them altogether. Consumer slicers are also difficult to adjust and cannot readily be used for a variety of slicing and grating tasks. The typical mandoline slicer is a unitask device that is infrequently used because of its limitations.
US 2011/094111 discloses a mandoline slicer with two sets of vertical blades placed on both sides of the main (transversal) blade. Each of the set of blades can selectively extend through slots above the tray surface for julienne type slicing. The product is put in a pusher and moved across the blades. For mincing a product, the pusher can be moved across the plurality of blades in a first pass in which it is cut by the plurality of blades. The pusher is then rotated 90 degrees, thereby rotating the clove as well, and moved across the plurality of blades in a second pass to cut the product again in a series of cuts that is perpendicular to the first series of cuts. When the product is then moved across the main blade, the product is sliced into small cubes, producing a minced cut of the product. The main slicing blade is positionable so that its slicing edge is above the upper surface of the tray, defining an adjustable distance between the main slicing blade and upper surface of the tray.
US 2014/331844 discloses a mandoline slicer with a first set of julienne blades configured to be raised above the surface of a platen and a second set of julienne blades deployable once the first set of julienne blades is deployed. The mandoline has a runout plate having the main blade moveable to a plurality of positions to define a plurality of cutting thicknesses between the distal end of the platen and the main blade. The platen has a plurality of julienne blade slots arranged in a row arranged between the main blade and the proximal end of the slicer.

### SUMMARY OF THE INVENTION

The mandoline slicer as described more fully below includes a slicing blade fixed to a blade tray, with a hand guard positioned for sliding movement over the tray. A first aspect of the invention is the subject matter recited in claim 1.
A second aspect of the invention is the subject matter recited in method claim 11.

Preferred embodiments are the subject matter of the dependent claims.

### BRIEF DESCRIPTION OF THE DRAWINGS

Examples of mandolines including the preferred embodiment of the invention and other mandolines, which are not embodiments but contain detailed descriptions of parts of the slicer also used in the preferred embodiment of the invention are described in detail below with reference to the following drawings:
Figure 1 is a top perspective view of a version of the mandoline slicer that is not an embodiment, shown with a slicing guard attached.
Figure 2 is a top plan view of a mandoline slicer which is not an embodiment
Figure 3A is a side partial exploded view of a mandoline slicer, shown with the hand guard partially exploded which is not an embodiment.
Figure 3B is a front view of a mandoline slicer which is not an embodiment.
Figure 4 is a bottom plan view of a mandoline slicer which is not an embodiment.
Figure 5 is a bottom perspective view of a mandoline slicer which is not an embodiment.
Figure 6 is a partial close-up bottom view of a mandoline slicer which is not an embodiment.
Figure 7 is a bottom perspective view of the preferred hand guard for use with a mandoline slicer.
Figure 8 is a partial close-up top perspective view of a mandoline slicer which is not an embodiment.
Figure 9 is a top perspective view of a mandolin slicer which is not an embodiment, shown without the hand guard and with a portion of the slicing ramp pivoted to expose a grating surface.
Figure 10 is a top perspective view of an alternate mandolin slicer, which is not an embodiment, shown with a hand guard attached.
Figure 11 is a side view of the alternate mandolin slicer.
Figure 12 is a top view of the alternate mandolin slicer, shown with a hand guard attached.
Figure 13 is a top view of the alternate mandolin slicer, shown without a hand guard attached.
Figure 14 is a bottom view of the alternate mandolin slicer. Figure 15 is a
   side view of the alternate mandolin slicer, shown with a folding leg in a retracted position.
Figure 16 is a partial exploded view of the alternate mandolin slicer, including a platen and platen support.
Figure 17 is a partial exploded view of the alternate mandolin slicer, including a runout plate and selectable slicing blade.
Figure 18 is a bottom view of an adjustable platen support shown in a first position.
Figure 19 is a bottom view of an adjustable platen support shown in a second position.
Figure 20 is a perspective view of a julienne blade selector with sets of julienne blades in which both sets of julienne blades are in a retracted position.
Figure 21 is a perspective view of a julienne blade selector shown with one set of julienne blades in a retracted position and one set of julienne blades in an extended position.
Figure 22 is a perspective view of a julienne blade selector shown with both sets of julienne blades in an extended position.
Figure 23 is a perspective view of the alternate mandolin slicer, shown with the runout plate rotated upward and a main blade frame in a first deployed position.
Figure 24 is a perspective view of the alternate mandolin slicer, shown with the runout plate rotated upward and a main blade frame in an intermediate position.
Figure 25 is a perspective view of the alternate mandolin slicer, shown with the runout plate rotated upward and a main blade frame in a second deployed position.
Figure 26 is a bottom perspective view of a preferred pusher.
Figure 27 is a front plan view of the pusher of Figure 26.
Figure 28 is a sectional view along plane A-A in Figure 27.
Figure 29 is an exploded view of the pusher of Figure 26.
Figure 30 is a top perspective view of an alternate version of a mandolin slicer according to the invention, shown with a first set of cubing blades extended.
Figure 31 is a top perspective view of the slicer of Figure 30, shown with a second set of cubing blades extended.
Figure 32 is a top perspective view of the slicer of Figure 30, shown with the first and second sets of cubing blades retracted.
Figure 33 is a top plan view of the slicer of Figure 30.
Figure 34 is a top plan view of the slicer of Figure 30, shown with a cubing adjustment knob in an extended position.
Figure 35 is a bottom perspective view of the slicer of Figure 30, indicating detail D36.
Figure 36 is a close-up view of detail D36 as indicated in Figure 35.
Figure 37 is a bottom plan view of the slicer of Figure 30.
Figure 38 is a bottom perspective view of the slicer of Figure 30, indicating detail D39.
Figure 39 is a close-up view of detail D39 as indicated in Figure 38.
Figure 40 is a top perspective view of the slicer of Figure 30, indicating detail D41.
Figure 41 is a close-up view of detail D41 as indicated in Figure 40.
Figure 42 is a perspective view of a preferred cubing blade assembly.
Figure 43 is a front plan view of the cubing blade assembly.
Figure 44 is a right side view of the cubing blade assembly.
Figure 45 is an exploded perspective view of the cubing blade assembly.
Figure 46 is a perspective view of an alternate preferred pusher frame for use with a preferred slicer having a cubing blade assembly.
Figure 47 is a perspective view of a preferred pusher grip for use with the pusher frame of Figure 46.
Figure 48 is a bottom plan view of the pusher grip of Figure 47.

### DETAILED DESCRIPTION OF THE PREFERRED EMBODIMENT

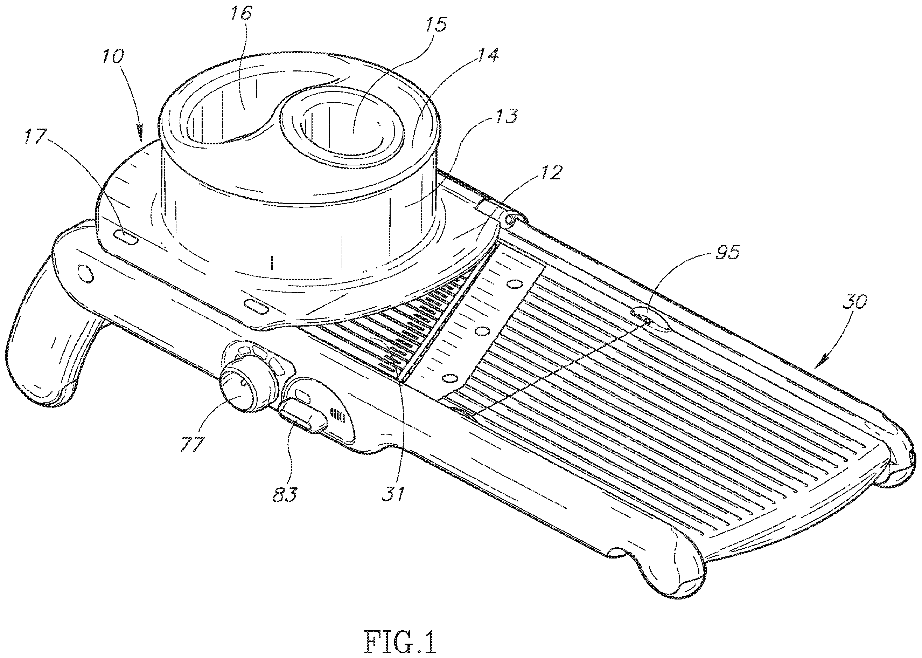

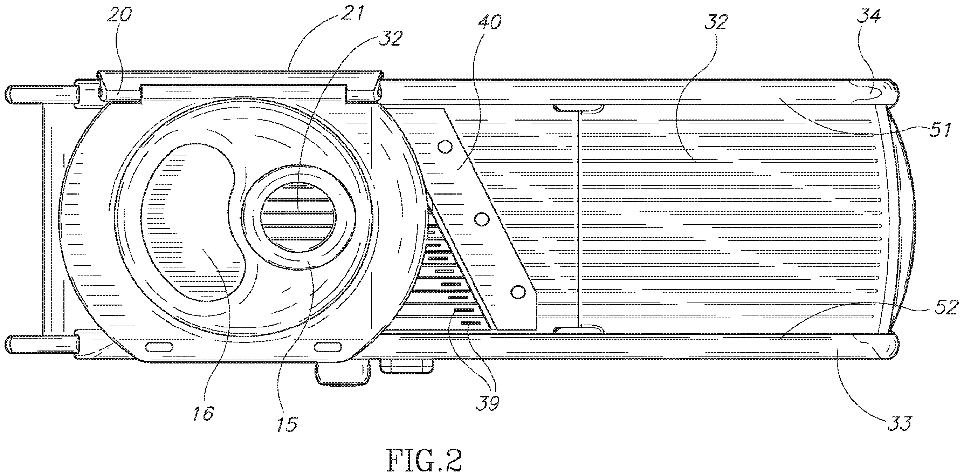

A mandoline slicer not forming part of the invention as illustrated in Figures 1 and 2 includes a hand guard 10 that is configured to slide along a ramp 30 toward a slicing blade 40. In accordance with various preferred aspects of the invention, the ramp may be formed in two sections, including a proximal first section 31 lying beneath the hand guard 10 in Figures 1 and 2 and leading toward the slicing blade, and a distal second section 32 extending away from the slicing blade. A gap is defined between the two ramp portions to allow the two portions to be adjusted upward or downward with respect to one another. The first section is adjustable to varying heights below the level of the slicing blade m order to vary the thickness of the slices produced.

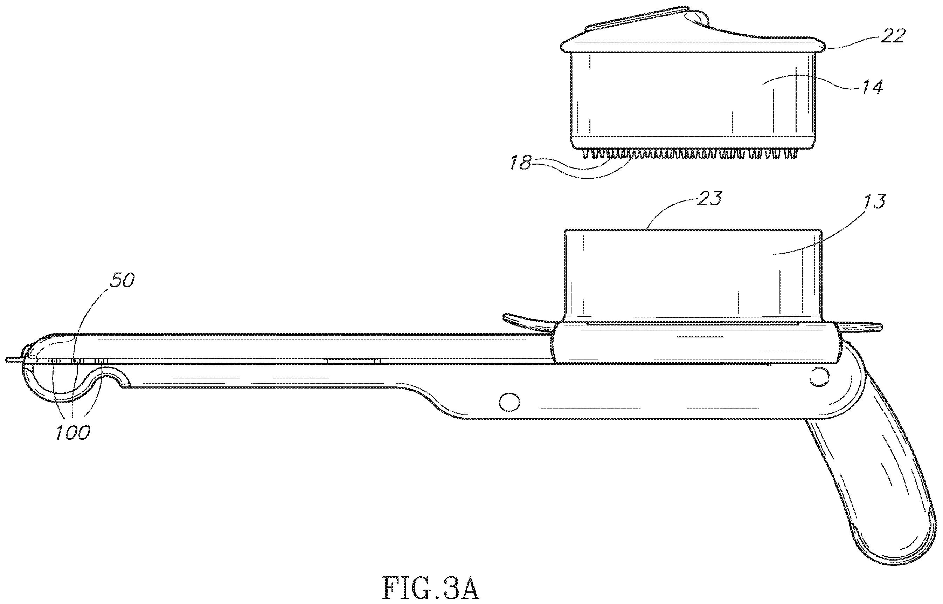

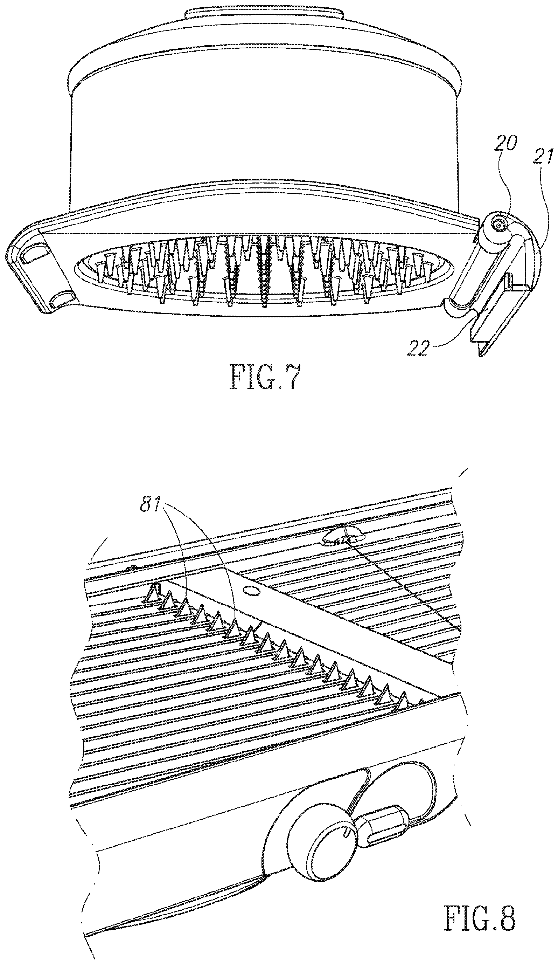

The hand guard is formed with a wide flange 12 surrounding a generally cylindrical grip pillar 13. The pillar 13 is hollow at its center and receives a mating cylindrical insert 14. The insert 14 has a bottom end with a series of spikes 18 (see Figures 3A and 7) or a similar gripping surface configured to hold a food item in order to slide it along the ramp and toward the blade. The insert is moveable upward and downward within the pillar in order to continue to move downward toward the ramp as a food item is sliced multiple times.

The insert 14, in the example of the invention as shown, includes a bore 15 extending through the insert so that a long food item such as a carrot can be positioned through the bore and into the blade while an opposite end of the food item may extend through the insert, as best seen in the top view of Figure 2. The vertical sidewalls of the bore may optionally include a series of ridges to reduce friction between the food item and the sidewalls. The insert further may include a finger cup 16, which in the preferred version is sized to receive up to four fingers of the user's hand. Unlike the bore 15, the finger cup 16 is formed with a floor that prevents fingers within the finger cup from contacting the tray or the blades. Thus, items inserted into the bore can pass all the way to the tray and the blades, but items inserted into the finger cup cannot.

The guard is configured to be supported by a pair of sidewalls 33, 34 formed on opposite sides of the ramp. Most preferably, the sidewalls are raised above the generally planar surface of the ramp to provide a degree of clearance of the guard above the ramp. As described further below, the sidewalls serve as guides to ensure a linear path of travel of the guard along the ramp.

One side of the guard flange 12 includes one or more pads 17. The pads are formed from a material intended to improve the ability of the guard to slide along the sidewalls, reducing friction and enhancing durability. In the version as shown, two pads are provided, one toward the front and one toward the back end of a first side of the guard flange, each of the pads having a surface area that is much smaller than the surface area of the flange. Thus, the first side of the guard flange is configured to slide along the first sidewall 33 of the ramp.

The second side of the guard flange includes a pivotal coupling 21 secured to the guard by a hinge 20, as shown in Figure 2. The coupling ensures that the guard remains in contact with the slicer and cannot become derailed during use.

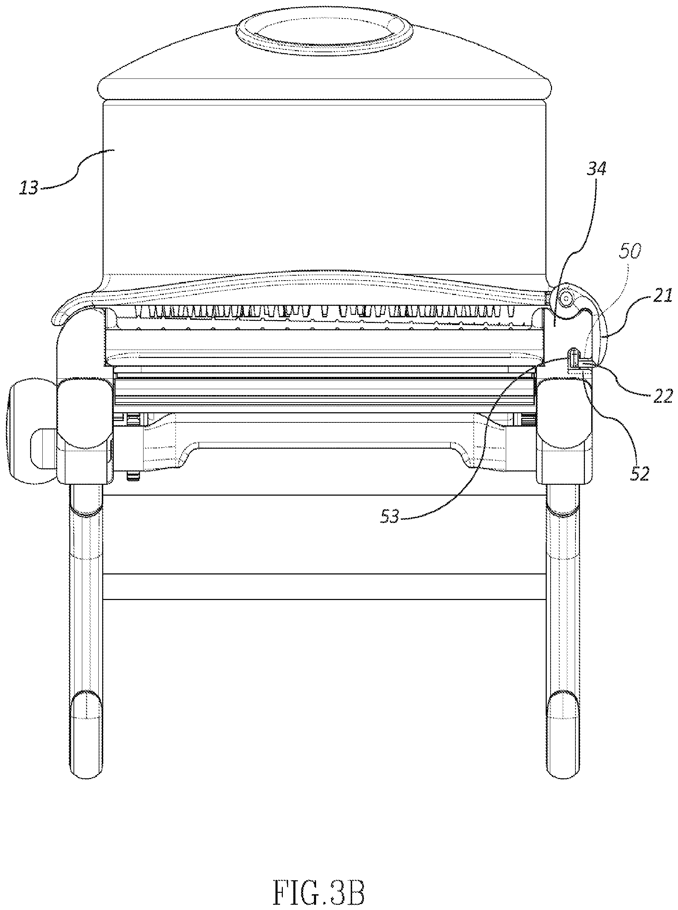

The second sidewall 34 of the slicer ramp includes a slot 50 (see Figure 3) that extends along the majority of the length of the second sidewall. The slot is formed along the lateral outside surface of the sidewall, and is formed with a lower surface that is generally horizontal, transitioning to a vertical wall within the slot. An upper portion of the slot is formed with an overhanging edge, such that the slot is configured as an L-shape when viewed from an end, perpendicular to the elongated side along which the slot extends.

The coupling 21 is formed with a complementary finger configured 22 to be received within the L-shaped slot, as best seen in Figures 3B and 7. In the preferred version, the coupling includes a curved lateral face that extends from the pivotal connection along the upper portion of the guard wall downward to the slot. The lateral face transitions to a curved finger, in the version as shown having two substantially perpendicular bends such that the finger is trapped within the vertical portion of the L-shaped slot. Accordingly, the finger portion of the coupling cannot be inserted or removed from the slot in a lateral direction, but rather may only slide longitudinally along the slot. The coupling is inserted by positioning it at the open end of the slot at the end of the slicer, then sliding the coupling into the slot. Once in position, the grip and guard flange may be pivoted upward and away from the ramp 30 or pivoted downward such that it is parallel with the ramp.

Most preferably, when the guard is pivoted into an operable position parallel with the ramp (that is pivoted at the hinge 20 into the position as seen in Figure 1), the lowest surface of the insert 14 and the gripping spikes 18 is raised somewhat above the surface of the ramp. This ensures that the grip and spikes are not cut by the slicer as it moves across the blade. The insert 14 is therefore formed with a peripheral flange 22 that abuts the upper rim 23 of the pillar in order to prevent the insert from falling fully through the pillar and contacting the ramp.

The second sidewall 34 further includes a channel 51 formed in the upper surface. The channel is sized and configured to receive the rounded shape of the hinge forming the pivot of the coupling, thereby allowing the hinge to slide smoothly down the sidewall.

In the preferred version, the ramp is adjustable to varying heights along the first portion of the ramp 31 leading to the blade 40. The first portion of the ramp comprises a substantially planar upper surface that is optionally formed with a plurality of ribs to reduce friction. The lower surface includes a pair of legs 90, 91 pivotally mounted to the lower surface and extending downward. The legs are positioned at opposite sides of the ramp, along the end of the ramp distant from the blade, and configured to abut the opposing sidewalls of the ramp. Each leg is pivotally secured to a respective one of the sidewalls to allow the first portion of the ramp to pivot about the pivot axis defined on the legs.

The upper end of the ramp 31 is pivotally movable about a pivot axis at the proximal end of the slicer, and in the preferred version the pivot axis is a common pivot axis also shared by the legs 90, 91 to allow the legs to pivotally rotate to a stored and deployed position. Thus, the legs 90, 91 and the first portion of the ramp 31 are both mounted along a common pivot axis at opposing pivot points 61, 62. A spring 63 is carried on the pivot axis of one of the legs 91 in order to bias the ramp in a downward position. Thus, in the preferred version the spring is a coil spring having one end attached to the lower side of the ramp and the opposite end attached to the sidewall adjacent the leg in order to urge the ramp downward and bias the portion of the ramp adjacent the blade into a downward position beneath the blade.

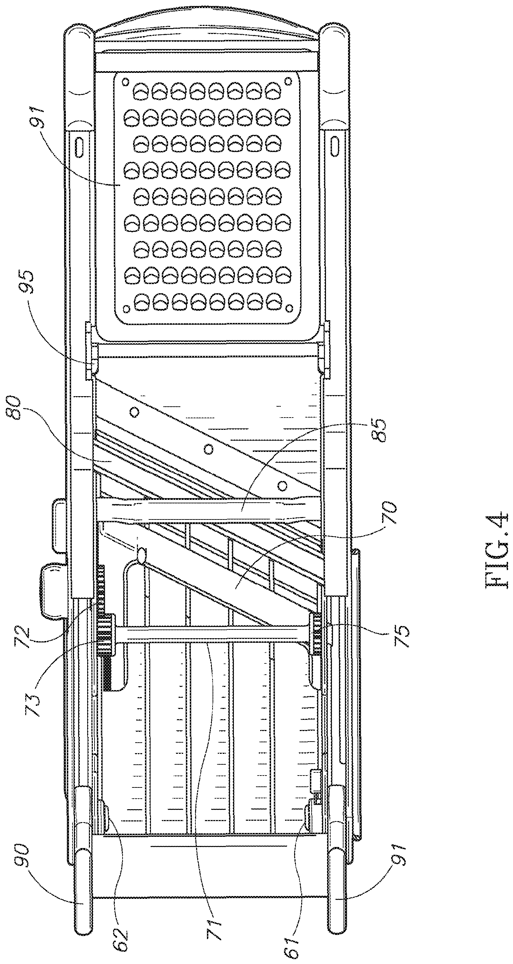

The first portion of the ramp 31 is adjustable in order to adjust the depth of the cutting blade with respect to the first end of the ramp adjacent the blade. Thus, the first portion of the ramp is selectively rotatable about the pivot point 64, thereby selectively altering the positioning of the edge of the first portion of the ramp with respect to the blade 40. The adjustment mechanism is best seen in Figures 4-6 showing the lower side of the ramp. A knob 77 is positioned on an outer surface of the sidewall and is carried on an axle for rotational movement. The axle extends through the sidewall to the inner surface of the sidewall where the axle secures to a first gear 72. The teeth of the first gear mesh with the teeth of a second gear 73 that is also pivotally supported by the sidewall. The second gear is further secured to an axle 71 that extends across the width of the ramp to the opposite sidewall. At the opposite end of the sidewall a third gear 75 is carried on the axle and pinned to the sidewall. Accordingly, rotation of the knob causes rotation of the first gear 72 and, by meshing of the teeth, rotation of the second and third gears 73, 75.

A ramp support 70 is slideably attached to the inner surfaces of the opposing sidewalls so that it may slide back and forth, generally along the plane formed by the first portion of the ramp. The support is generally in the shape of a skewed U, in which the base portion is angled and the two uprights are of unequal lengths. Each of the uprights includes a series of teeth 74, 76 that mesh with the teeth of a respective gear 73, 75. Consequently, rotation of the second and third gears (which are fixed in position to the sidewalls) causes lateral movement of the support structure by movement of the teeth 74, 76.

The base portion of the support structure (that is, between the two uprights) extends laterally across the width of the lower side of the first portion of the ramp. The lower side of the first portion of the ramp is formed with a series of stepped ribs 78 that are increasing in height as they move away from the pivot end of the ramp. Movement of the support 70 in a first direction (that is, in the direction toward the blade) causes the support structure to engage taller steps of the ribs, thereby pushing the ramp upward (with "upward" being a direction from the bottom side of the ramp toward the top side of the ramp). In the highest position, the ramp is preferably flush with or slightly above the sharpened edge of the blade so that no slicing may occur. Movement of the support in a second opposite direction (that is, away from the blade 40 and toward the legs) causes the support structure to engage shorter steps of the ribs 78, and the spring 63 urges the ramp downward, inclining it below the sharpened blade. By selectively rotating the knob 77 to cause the support to engage a desired level along the stepped ribs, a desired differential can be achieved between the vertical height of the ramp with respect to the position of the fixed blade. Accordingly, the thickness of the slices produced can be adjusted by turning the knob. As seen in Figure 1, the sidewall may include thickness indicators adjacent the knob 77 to indicate to the user the relative slicing thickness at particular knob rotational locations.

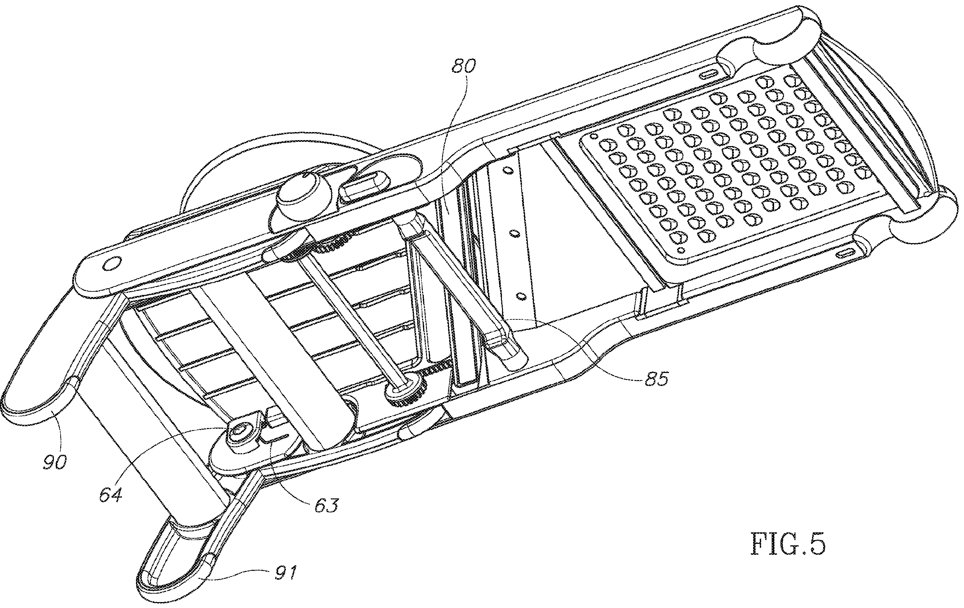

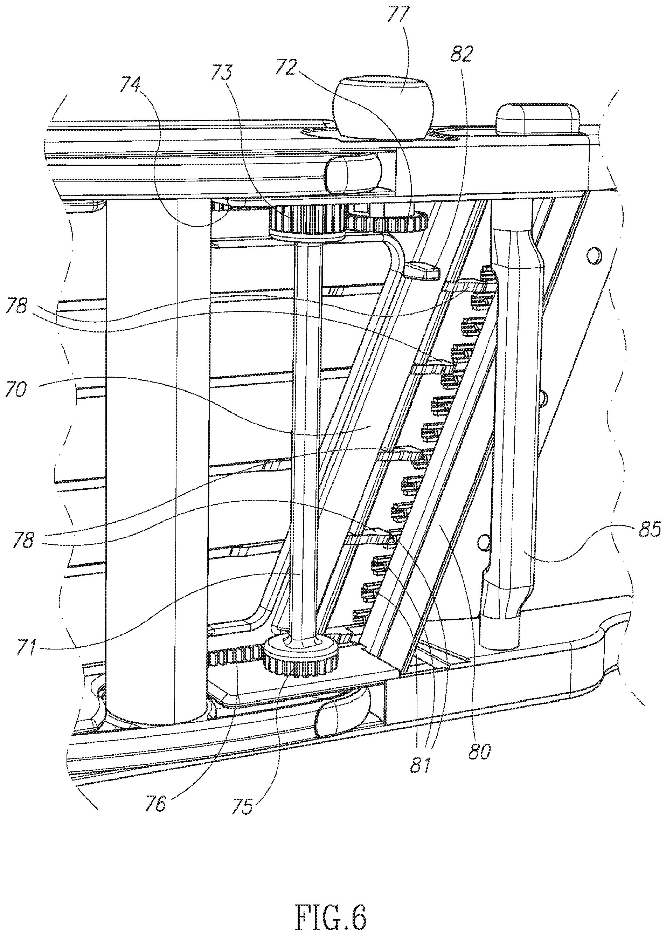

A series of julienne blades may also be provided. As best seen in the close-up view of Figure 8 and the bottom views of Figures 5 and 6, several blades 81 are carried by a bar 80 positioned beneath the lower surface of the slicer. A corresponding series of slots 39 is formed in the first portion of the ramp at a location adjacent the blade, such that each one of the vertical julienne blades is extendable upward and through the slots or retractable beneath the slots. The bar (and therefore the julienne blades) is preferably oriented to be parallel with the line defining the sharpened edge of the blade 40.

The vertical movement of the julienne blades 81 is effected via a lever pivotally mounted on an outer portion of one of the sidewalls. In the illustrated version, the lever is mounted adjacent the slicing adjustment knob. The lever 83 is carried on an axle extending through the sidewall and extending across the lower side of the ramp where it is pivotally mounted to the opposite sidewall. The julienne axle 85 includes a cam surface (best seen in Figure 5) whereby rotation of the lever to a first position causes the cam surface to push the julienne bar upward and rotation of the lever to a second position moves the cam surface away from the julienne bar, allowing it to move downward. In the preferred version, the cam surface extends substantially along the entire length of the axle, in which one side of the axle is radially offset with respect to the opposite side of the axle. Both opposing sides of the axle have substantially flat surfaces so that they may engage the corresponding flat lower surface of the julienne bar 80. The engagement of the mutually flat surfaces prevents the julienne axle 85 from freely rotating unless a user turns the lever to cause it to rotate.

The slicing adjustment knob further includes a feature for ensuring that the julienne blades are retracted when the ramp is adjusted to a locked position. When the support 70 is moved to its farthest position, engaging the tallest steps on the ribs 78, the ramp is pushed upward to a height at least somewhat above that of the blade 40. Accordingly, the ramp is in a substantially safe position in which there is little or no risk of contact with the blade. Because the julienne blades are vertical and have a height that is above the height of the slicing blade 40 when they are deployed, the support 70 further includes a vertical stem 82 (see Figure 6) extending downward from the support at the base of the U shape, in a direction away from the ramp. As the support slides toward the farthest step on the ribs, the stem encounters an edge of the julienne axle 85, causing it to rotate. If the julienne bar is already in the stowed position, the stem slides beneath the julienne bar without contacting it. Because of the offset axial alignment of the julienne axle, the rotation caused by the stem 81 will cause the julienne blades to retract to the stowed position beneath the surface of the ramp. Thus, rotation of the adjustment knob to the locked or stored position also causes the julienne blades to retract to a stored position if it is not already in that position. Appropriate indicators on the sidewall of the device provide a visual indication of the locked and deployed positions, as well as positions corresponding to the various steps in the ribs.

At the distal end the lower surface of the slicer includes feet having a nonskid or elastomeric material applied. At the proximal end, the slicer includes pivotally retractable legs 90, 91. When extended, the legs raise the rear end of the slicer with respect to the front end of the slicer, thereby forming a downward incline from the rear toward the front end of the slicer.

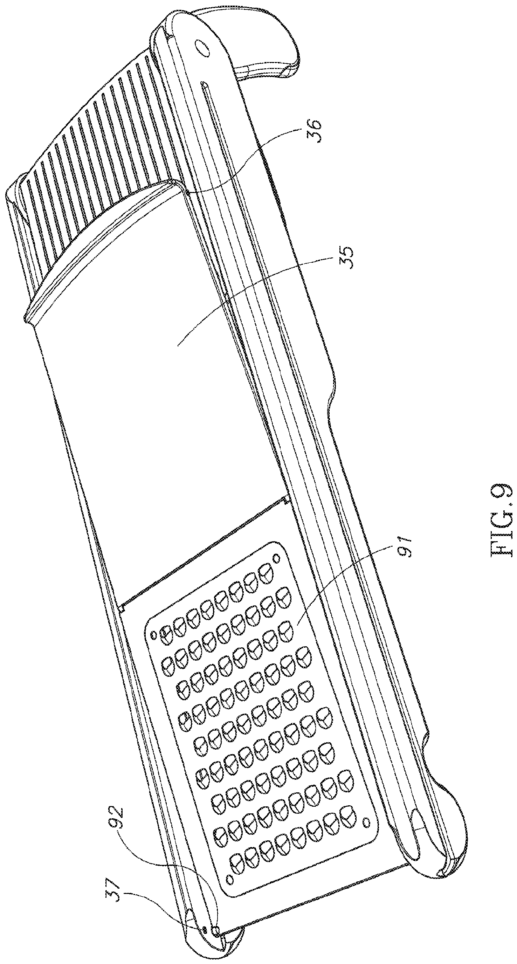

The forward or distal portion of the ramp 32 may be integrally formed with the ramp in some versions of the invention. In other versions of the invention, it is pivotally attached to facilitate use of a grating surface positioned beneath it. In such a version, the forward ramp surface 32 has a first end 35 adjacent the slicing blade and a distal second end. The first end is pivotally mounted so that the ramp may be rotated about the pivot point approximately 180 degrees. In the pivoted orientation, it covers the slicing blade and exposes a grating surface that otherwise lies beneath the forward portion of the ramp in its standard position. In Figure 9, the first end 35 of the ramp is pivoted to expose the grating surface 91, while in the remaining figures it is pivoted to cover the grating surface.

A grating surface 91 is supported at the forward end of the slicer. In the preferred version, the grating surface is planar in shape and spans the width of the sidewalls. The grating surface is pivotally mounted to the forward end of each of the opposing sidewalls, for example at a location 92, so that it can pivot somewhat between a substantially horizontal stowed position and a slightly inclined operational position.

Adjacent the pivot axis of the forward ramp 32, each side includes an arm 95 extending rearward from the pivot point. As the forward ramp is pivoted upward and about the pivot axis carrying the arms 95, the arms rotate below the plane of the ramp and an end of the arms engage a lower surface of an end of the frame of the grating surface. As the forward ramp continues its pivotal movement to a point where it covers the slicing blade (that is, having been rotated approximately 180 degrees), the arm continues to pry the end of the grating surface upward. The face of the arm in contact with the grating surface is configured to support the end of the grating surface at a desired angle. In the preferred version, the grating surface is slightly inclined with respect to the plane defined by the overall ramp. Accordingly, the rotation of the forward portion of the ramp 32 causes the arms to slightly raise the adjacent end of the grating surface 91 such that the rotated forward end of the ramp 32 and the grating surface lie substantially in the same plane.

The forward portion of the ramp further includes one or more tabs 36 that are positioned to engage corresponding slots formed along the sidewalls, such that when the forward portion of the ramp is fully pivoted away from the grating surface the tabs engage the slots to hold the forward portion of the ramp in a position generally adjacent the slicing blade. In this position, the forward portion of the ramp is at or below the level of the upper surface of the sidewalls so that the guard may slide over the top of the forward portion of the ramp and along the grating surface. An additional pair of slots 37 is formed at the forward end of the sidewalls to engage the tabs when the forward ramp is in its stowed position, covering the grating surface.

As best seen in Figure 3A, an inner surface formed in the L-shaped slot 50 further includes a stop configured to slow or limit travel of the hand guard coupling within the slot. In the preferred example, the stop is configured as section of resilient material, and as illustrated it forms a series of ribs 100 housing TPE or other resilient material. The TPE provides further frictional resistance, additionally helping retain the coupling within the slot while still allowing it to be removed if desired. In the illustrated version, three resilient ribs are shown. A greater or smaller number of ribs may be provided in alternate versions.

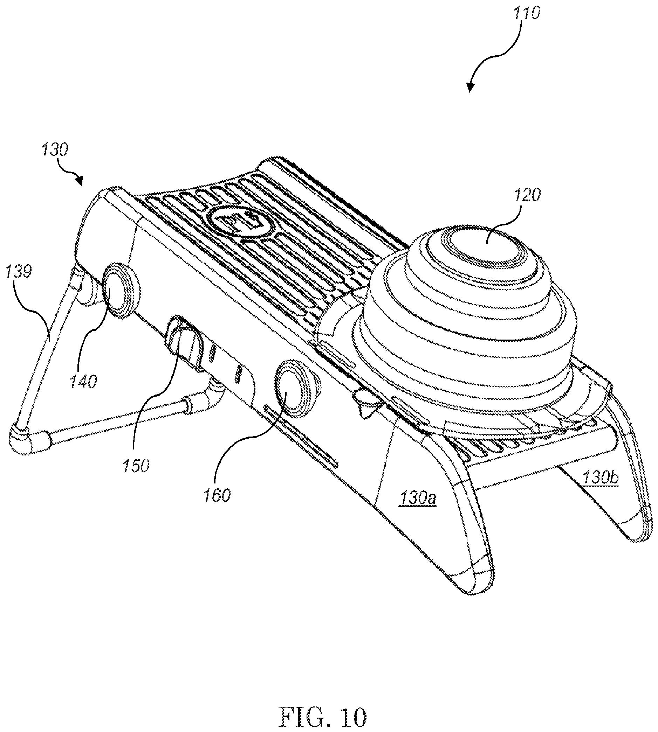

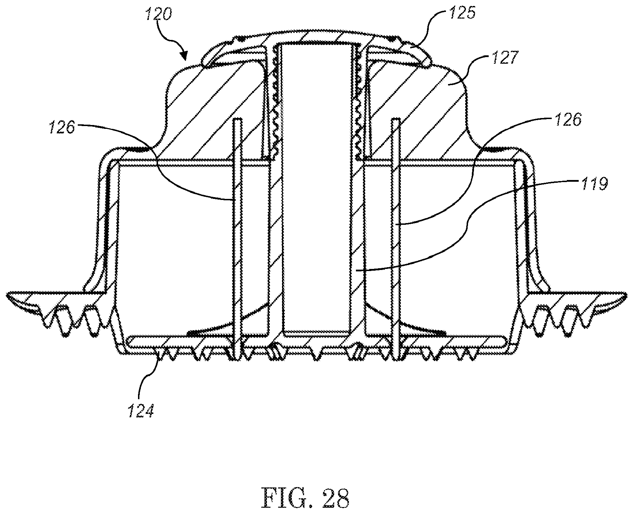

An alternate version of a preferred mandolin slicer is illustrated in Figures 10-29. The alternate slicer incorporates some of the features described above, together with some additional alternate features.

In accordance with some of the preferred aspects of an alternate slicer (which may include one or more of the particular preferred features), the mandolin slicer 110 includes a frame 130 configured with side walls 130a, 130b having upwardly extending rails to accept a hand guard or pusher 120 and having a support leg 139. In the illustrated version, the leg is pivotally attached at a rear end of the frame, and includes one or more rear feet formed from a material to provide a non-skid surface. In some versions, a handle may be mounted between opposing left and right rear legs at a location between the feet and the location of pivotal attachment to the frame.

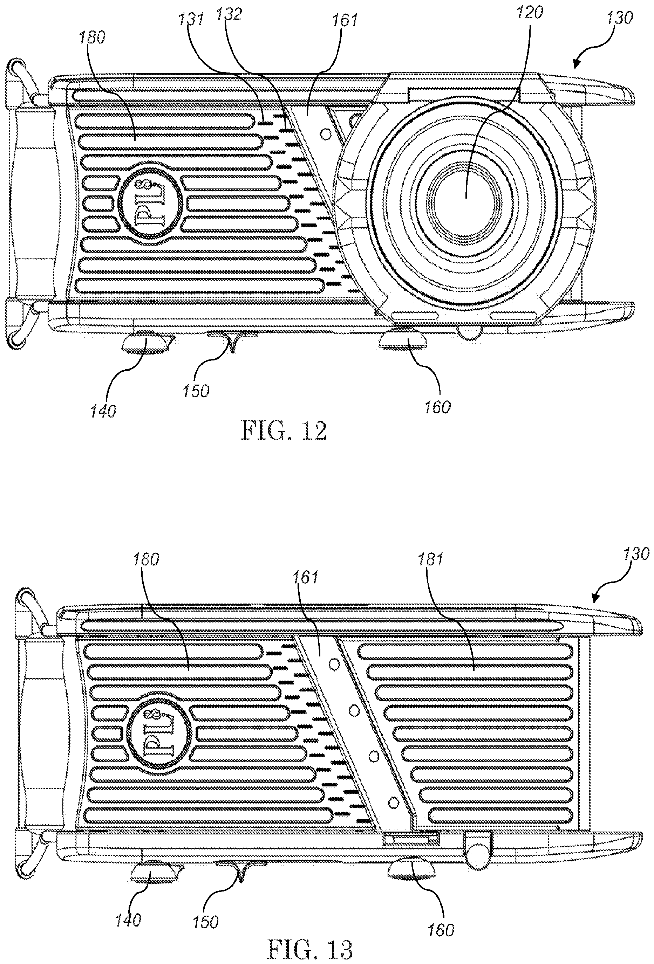

As best seen, for example, in the top plan views of Figures 12 and 13, the mandolin slicer further includes a platen 180 having a proximal end (adjacent the rear of the slicer) and a distal end (at the forward end of the slicer, where the item being sliced will complete its path of travel). The platen in the preferred version includes two rows of holes 131, 132 at the distal end to receive retractable vertical blades (sometimes referred to as julienne blades"). A main blade 162 extends between opposing frame side rails, preferably at an angle that is not perpendicular to the side rails. The sharpened edge of the main blade is separated from the distal end of the platen by a small gap that allows the platen to be raised to a height which is preferably slightly above the blade, and lowered to a position beneath the blade in order to adjust the slicing thickness.

A runout plate 181 (see Figure 13) is positioned at the forward end of the slicer, configured such that when the platen is in the raised position the platen and runout plate lie substantially in the same plane. Most preferably, in the stored position the platen is raised at least slightly above the main blade and the runout plate.

A platen adjuster knob 140 extends laterally outside the frame and is configured for rotation to raise and lower the platen as described further below. A julienne/fry selector slide 150 also extends laterally outside the frame and is connected to an internal selector frame to raise and lower a pair of rows of julienne blades. A blade knob 160 also extends laterally from the frame, and is configured to selectively rotate a pair of blades into or out of position for slicing.

The platen 180 is substantially planar over most of its area, with a plurality of longitudinal ribs and grooves extending from the rearward end to the forward end to reduce friction as food items travel toward the main blade. A first row of holes 131 and a second row of holes 132 are each positioned at the forward end of the platen, positioned adjacent the main blade when the slicer is assembled. In a preferred version of the invention, the platen is formed from stainless steel, though in other versions different materials may be suitable.

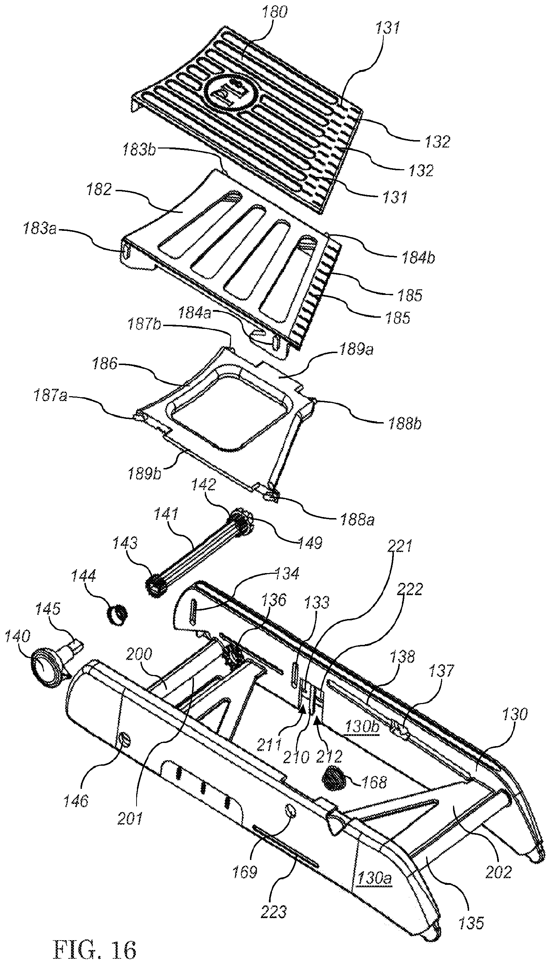

A platen support 182 (see, for example, the exploded view of Figure 16) is mounted below the platen to hold the platen in its selected vertical position with respect to the frame. The platen support includes a pair of opposing left and right legs at the rearward end, each having outwardly extending rear tabs 183a, 183b, and a pair of opposing left and right legs at the forward end, each having outwardly extending forward tabs 184a, 184b. The forward end of the platen support further includes a row of slots 185 positioned to receive julienne blades and positioned to align with the first row of holes 131 formed in the platen.

The outwardly extending tabs in the platen support are received m vertically-extending grooves (e.g. 133, 134) formed in the rear end of the frame sidewalls. A pair of grooves is formed on each of the left and right sidewalls of the frame at the rearward end, to receive the four outwardly extending tabs; within Figure 16 the grooves (133, 134) on one of the sidewalls is visible while the opposing grooves are hidden from view. The grooves and tabs are sized and configured to allow the tabs to travel up and down within the grooves, thereby allowing the platen support to travel upward and downward.

A height adjuster 186 extends laterally between the opposing left and right frame sidewalls to cause the platen support (and therefore the platen) to raise and lower. The height adjuster includes a pair of laterally extending fins 189a, 189b that are received in axially extending channels (e.g., 36; an opposing channel in the opposing sidewall is not visible) formed in the frame sidewalls. Thus, each sidewall includes a channel 36 extending in a direction from the rear toward the front of the slicer, and positioned beneath the area defined by the platen. The channels 136 are longer than the fins 189a, 189b, thereby allowing for some linear travel, forward and backward, of the height adjuster within the channels.

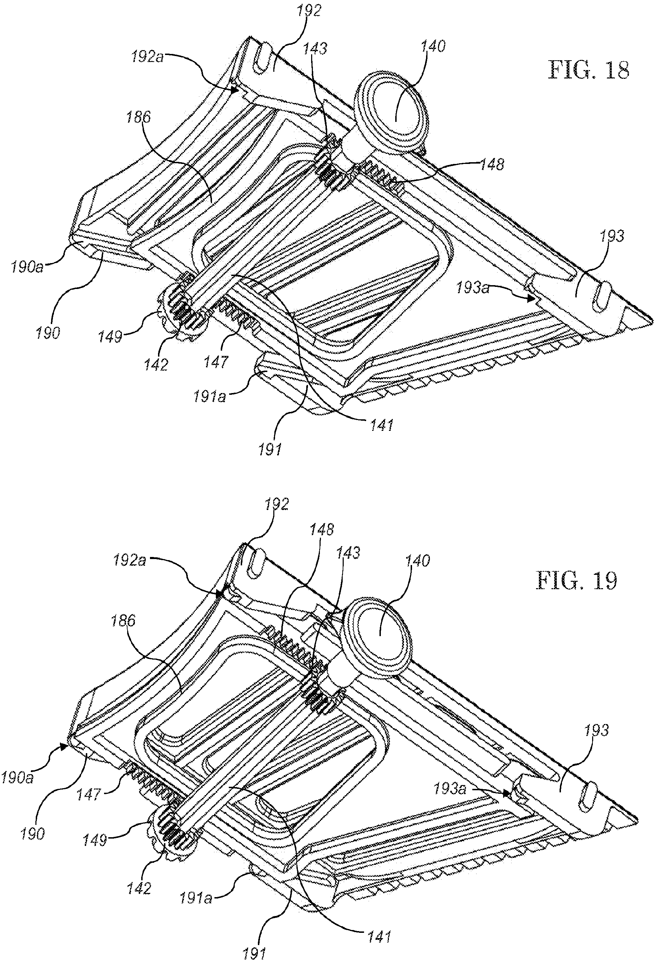

The height adjuster further includes a pair of left and right pegs 187a, 187b, 188a, 188b positioned on the left and right sides of the height adjuster and extending laterally outward toward the opposing left and right frames. The left and right pegs of the height adjuster are trained in inward-facing inclined channels 190a, 191a, 192a, 193a formed on lateral downwardly-depending skirts 190, 191, 192, 193 of the platen support (see Figures 18, 19). The channels are inclined upwardly from the rear end toward the front end, such that movement of the height adjuster in the forward direction with respect to the platen support causes the pegs to travel upward in the channels, pulling the platen support downward toward the height adjuster. Movement in the opposite direction pushes the platen support upward, away from the height adjuster.

A lower surface of the height adjuster is formed with a series of linear gear teeth 147, 148 positioned on each of the left and right sides of the height adjuster. A guide gear includes a main axle 141 extending between opposing sidewalls of the frame, with a pair of gears 142, 143 positioned at each end of the main axle. The gears 142, 143 are meshed with the linear gear teeth on opposing racks 147, 148, such that rotation of the axle causes movement of the gears within the linear gear teeth.

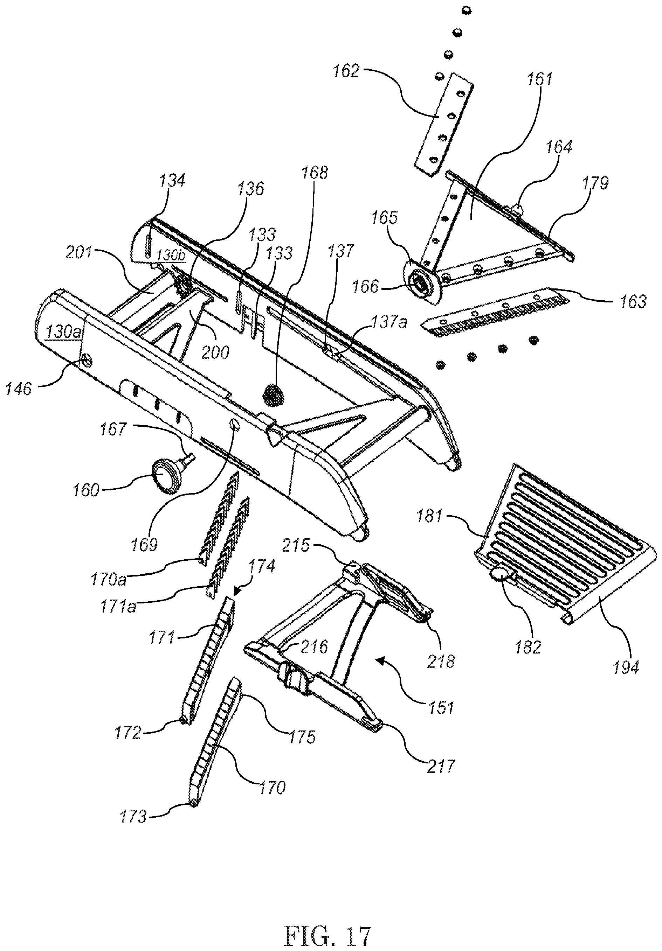

The distal end of the main axle terminates in a set of axially directed teeth 149 which mesh with a mating gear 136 mounted to the sidewall. The mating gear 136 (see Figures 16, 17) is fixed in position against the sidewall, such that when the main axle teeth 149 are enmeshed with the mating gear 136, the main axle will not rotate. The main axle is supported within a channel 201 formed in a lateral frame support 200 extending between opposing frame sidewalls.

A proximal end of the main axle 141 includes a cavity to receive a stem 145 of an adjuster knob 140 (see exploded view of Figure 16). The adjuster knob stem extends through the hole 146 formed in the frame sidewall such that rotation of the adjuster knob causes rotation of the main axle. A spring 144, preferably configured as a coil spring, is carried on the stem 145 of the knob and positioned between the right gear 142 and the adjacent frame sidewall. The spring urges the main axle inward, toward the left sidewall 130b, in which the axial gear 149 is enmeshed with the mating gear 136 in order to prevent rotation of the axle and thereby to maintain the platen in position. When a user desires to raise or lower the platen, the knob 140 is pulled outward from the right sidewall 130a, thereby separating the axial gear teeth 149 from the mating gear 136 positioned on the left sidewall 130b and allowing rotational movement of the axle. The rotation of the knob and axle causes the gears 142, 143 to move the adjuster, which in turn causes the platen support to move upward or downward.

The platen terminates adjacent a cutting blade supported by a main blade frame 161. The main blade frame is generally triangular in shape, having a main blade 162 mounted at one side and a second blade 163 mounted at a second side. In the illustrated version, the second blade is a waffle blade. Other blades having serrations or scalloped edges may also be used. The third side of the triangular main blade frame 161 is positioned along an inside wall of the left sidewall 130b.

The thickness of the main blade 162 and second blade 163 form a slight step or height above the main blade frame 161. In a preferred version of the invention, the runout plate 181 is configured in a thickness such that it lies at about the same height or slightly below that of the main blade or second blade when either blade is in position and the runout plate is rotated down atop the main blade frame. Accordingly, an object being sliced can travel down the platen, encounter the blade, and continue smoothly down the runout plate without being snagged by the runout plate.

The main blade frame includes a mounting plate 165 positioned at an apex where the first and second blades meet. The mounting plate terminates in a cylindrical hub 166 having an internal central slot for receiving a stem 167 from the blade knob 160, which extends through a hole formed in the right frame sidewall 130a.

The third side of the main blade frame terminates in an elongated fin 179 having a central mounting stem 164. The mounting stem 164 is received in a recess 137 formed in the interior of the left sidewall 130b. In one version, the recess further includes a short projection 137a that is sized to fit within a complementary cavity formed in the mounting stem. An elongated channel 138 is also formed in the left sidewall, with the recess 137 being positioned substantially at the middle of the channel. When the main blade frame is in position within the frame, the elongated fin 179 is received within the channel 138 and the stem 164 is received within the recess 137.

The blade knob 160 includes a stem 167 that extends through a hole 169 formed in a right side of the frame. A coil spring 168 is trained around the stem and trapped between the mounting plate 165 and the frame sidewall 130a. The spring is configured to urge the main blade frame in a direction from the right sidewall 130a toward the left sidewall 130b, and therefore pushes the fin 179 into the elongated channel 138. Accordingly, the elongated fin and channel configuration prevent rotation of the main blade frame 161.

In order to rotate the main blade frame, a user pulls the blade knob outward and away from the right sidewall of the frame 130a. The spring compresses as the fin 179 is removed from the channel 138. The stem 164, however, is sized such that it remains within the recess 137, with the projection of the recess also remaining within the cavity formed in the stem Thus, the main blade frame can now rotate within the recess because of the separation of the fin from the channel. By rotating the knob, the main blade frame can be rotated into a position in which either the first or second blade is positioned toward the platen, as desired.

The runout plate 181 covers the majority of the main blade frame other than either the first or second blade, whichever is positioned adjacent the platen. The runout plate 181 includes a forward end 194 having a terminal U-shape, which can be snap-fit around a beam or axle 135 extending between the left and right frame sidewalls 130a, 130b. The attachment of the runout plate 181 to the axle allows the runout plate to pivot about the axle.

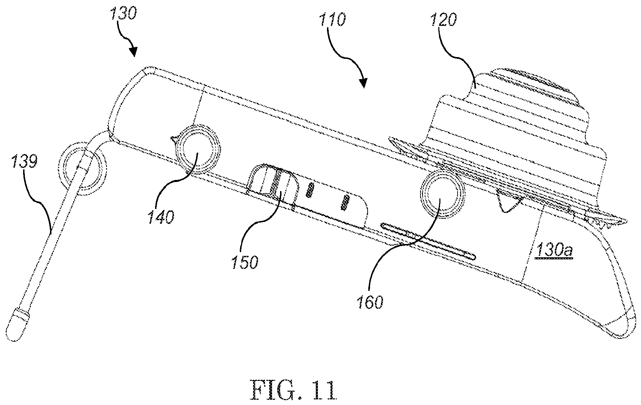

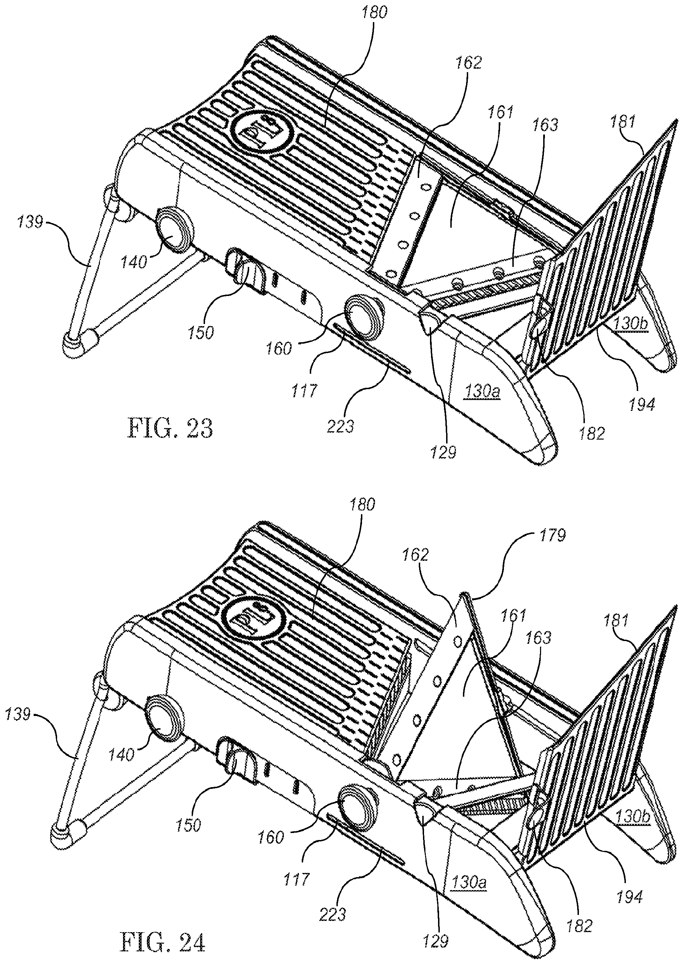

A lateral tab 182 is formed on the runout plate, preferably integrally formed with the runout plate. When the runout plate is in the working position (as in Figures 11-15), the tab is seated within a shallow well 129 formed in the upper right sidewall 130a. In order to rotate the blade frame, the user grasps the tab 182 to rotate the runout plate 181 upward to a raised position (as in Figures 23-25), thereby allowing access to the main blade frame 161 for rotation. Once the blade frame is rotated, the runout plate is dropped down in position again for use. The shallow well 129 is sized and configured to form a friction fit with the tab 182 in order to hold the runout plate snugly downward against the blade frame for use. In other versions, the well and tab may include magnets or other features to lock the runout plate in place.

With reference to Figure 23, the main blade frame 161 is configured in a first position in which the main blade 162 is adjacent the platen 180 and the second blade 163 is positioned away from the platen. When the runout plate 181 is rotated upward into the position as shown in Figure 23 (pivoting on axle 135, best seen in Figure 16), the main blade frame is accessible for rotation.

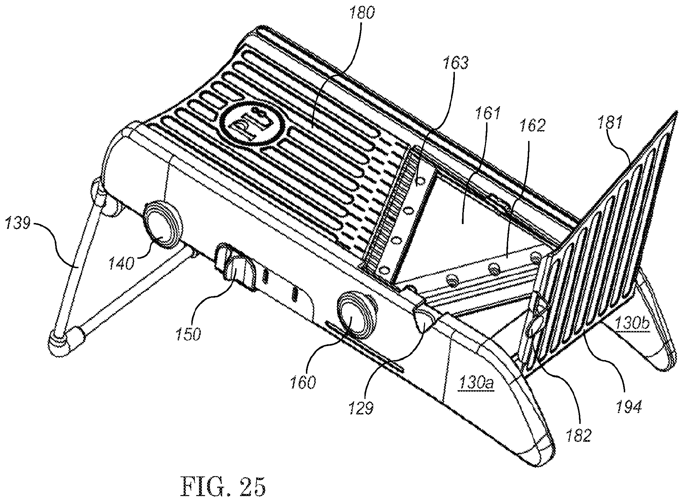

With reference to Figure 24, the knob 160 is pulled outward and the main blade frame 161 is shown in an intermediate position of rotation in which the main blade 162 and second blade 163 are rotated out of the plane formed by the platen and runout plate. From this position the main blade frame can continue its rotation until it is flipped 180 degrees from the orientation from Figure 23, resulting in the orientation shown in Figure 25. In this configuration, the second blade 163 is now adjacent the platen and the main blade 162 is extending away from the platen.

When the main blade frame is rotated into a desired position, the knob is pressed back inward by the urging force of the spring, causing the fin to be received within the channel to lock the main blade frame in position as shown in Figure 25. The runout plate can then be rotated back down on top of the main blade frame 161 so that the slicer can be used with the second blade 163.

In one version of the invention, a pair of rows of vertical blades is also provided. The two rows of vertical blades are spaced apart from one another such that the blades of the second row are positioned in which the individual blades alternate between the blades of the first row when both rows of vertical blades are raised above the platen. As such, a food item will be cut into strips that are twice as wide when only the first row of blades is raised as they will be cut with both rows of blades raised. In one example, the blades in each frame are spaced apart by 8mm, such that when both frames are raised the staggered spacing produces a blade spacing of 4mm. The blades may be spaced wider or closer in other versions, and in some versions the blades are spaced differently on the first row of blades than on the second row of blades. The 8mm spacing is more useful for cutting potatoes into strips or fries, and therefore the blade spacing may be considered to be for fries. When used together, they may be more suitable for julienne cutting. As such, the first blade frame may be referred to as a fry blade frame while the second blade frame may be referred to as a julienne blade frame. In other versions, the blades may be spaced farther apart or moved closer together in accordance with the invention.

A first blade frame 170 is sized to extend across the opposing left and right sidewalls of the frame, with a plurality of short blades 170a extending vertically from the blade frame. The first blade frame includes a pair of pegs 173, 175 extending outwardly from each of the opposing ends of the frame. A second blade frame 171 is likewise configured with a plurality of vertical blades 171a and a pair of pegs 173, 175 extending outwardly from each opposing end.

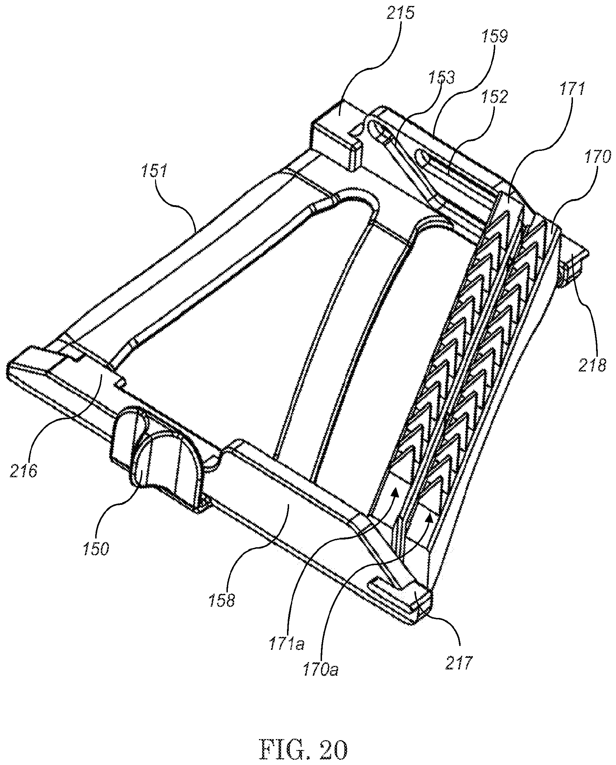

The pegs of the first and second vertical blade frames are received within channels formed in a fry/julienne selector 151, as best seen in Figures 20-22. The selector is referred to as a fry/julienne selector because, as described above, it allows a user to selectively raise one or both sets of vertical blades to control the width of food items cut by the vertical blades.

A first channel 152 is positioned on a first side and configured with a first horizontal portion and a second inclined portion. A complementary second channel is formed on a second side of the fry/julienne selector, configured in the same manner. A third channel 153 is positioned on the first side and is configured with a first inclined portion and a second horizontal portion. A complementary fourth channel is formed on the second side and configured in the same manner.

The pegs of the first julienne frame 170 are positioned in the first and second channels, while the pegs of the second julienne frame 171 are positioned in the third and fourth channels. In each case, the first and second julienne frames are configured to slide along the corresponding channels such that they are extended upward through the platen when they travel to the top of the inclined portion, and they extend below the platen when they travel to the bottom of the inclined portion. The julienne frames are further configured to be restricted against movement in a direction forward or backward along the slicer, and instead occupy a fixed position axially along the length of the slicer. This fixed position corresponds to the location of the blade slots 131, 132 formed in the platen. Thus, the selector 151 moves fore and aft while the blade frames remain fixed, such that fore and aft movement of the selector causes the blade frames to move upward or downward in the selector channels.

At a first position as shown in Figure 20, the selector is closest to the rear of the slicer (that is, toward the platen and away from the runout plate) and both frames 170, 171 are in the recessed position, with no blades extending above the platen.

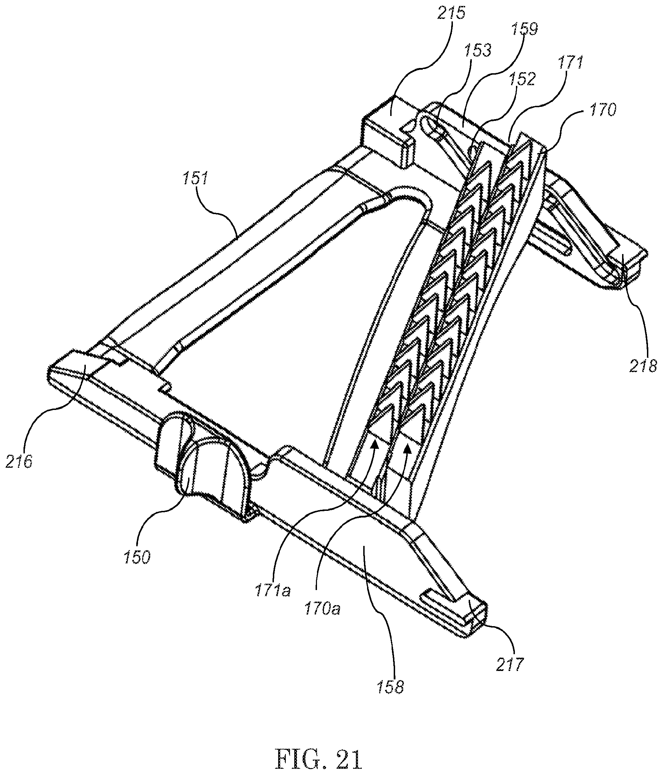

As shown in Figure 21, as the selector 151 travels toward the forward end of the slicer (that is, toward the runout plate) and into the second selector position, the first frame 170 travels up the first inclined portion of the first and second channels 152, raising the first set of blades upward and through the second set of holes 132 formed in the platen. Meanwhile, the second frame 171 initially moves along the horizontal portion of the third and fourth channels 151, which is below the horizontal portion of the first and second channels. This initial horizontal movement maintains the second set of blades in a recessed position while the first set of blades is raised. If desired, the user can maintain the blades in this position, with the first set of blades raised and the second set retracted.

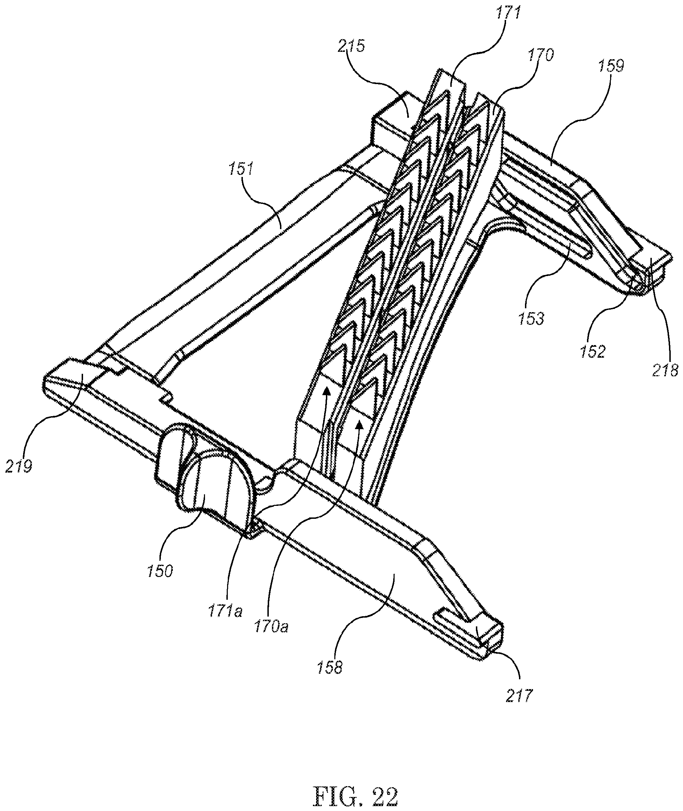

Finally, as shown in Figure 22, as the selector 151 travels farther toward the forward end of the slicer, into the third position, the first frame 170 travels along the upper horizontal portion of the first and second channels 152, and because the upper portion of the channel is horizontal it maintains the first frame in the raised position. Meanwhile, the second frame travels along the inclined portion of the third and fourth channels 153, raising the second frame and its blades above the upper surface of the platen.

A tab 150 or knob is attached to or integrally formed with the selector, and is positioned outside the frame so that the user can slide the tab (and therefore the selector) axially forward and backward along the slicer to raise and lower the blades. In the illustrated version, the frame includes external markings corresponding to tab locations for retracted, one blade frame raised, and two blade frame raised positions as described above.

In one version of the invention, the selector 151 is trapped within hollow sidewalls and supported by a lower interior sidewall edge, as described below. The hollow interior sidewall is partially visible, for example, in Figure 16 through open channels 211, 212 within frame sidewall 130b. The selector 151 is formed with opposing vertical sidewalls 158, 159, with the channels 152, 153 being formed in the interior-facing surfaces of the opposing vertical sidewalls. The left and right frame sidewalls 130a, 130b are formed with a hollow interior that is sized and shaped to receive the vertical sidewalls 158, 159 of the selector 151 for sliding axial movement of the selector sidewalls within the frame sidewalls.

Most preferably, the selector includes a plurality of retaining surfaces 115-118 formed as horizontal flanges extending inward or outward (or both) from the selector. The retaining surfaces form abutments that ride along a corresponding shelf or groove formed within the interior sidewalls of the frame in order to retain the selector within the opposing frame sidewalls and define a linear path of travel of the selector within the frame. An opening in the lower edge of the frame sidewalls 130a, 130b allows the bottom of the selector to extend through the frame while the abutments 115-118 trap the vertical uprights 158, 159 and channels 152, 153 within the frame sidewalls.

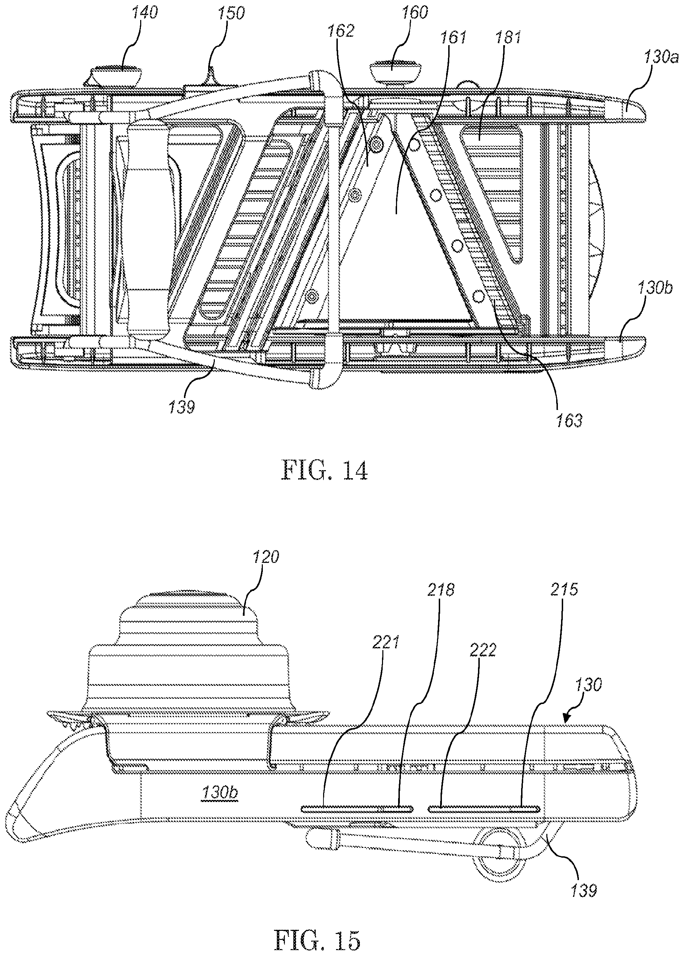

In the illustrated version, a first horizontal channel 223 is formed within the right frame sidewall 130a, as best seen in Figure 16. A second horizontal channel in the right sidewall is formed within the frame on an interior side and not visible in Figure 16. A pair of opposing third and fourth channels 221, 222 are formed in the left frame sidewall 130b, as seen in Figures 15 and 16. The horizontal tabs 216 and 218 are seated within the third and fourth channels 222, 221 (respectively) as best seen in Figure 15. An abutment 217 on the opposite side of the selector 151 is seated within the horizontal channel 223 formed in the right sidewall frame member 130a, as best seen in Figure 24. The abutments slide forward and rearward within the channels as the selector knob 150 is moved forward and rearward, thereby moving the selector 151 forward and rearward along a fixed horizontal plane parallel to the plane of the runout plate (or distal ramp portion).

The frame preferably includes an interior downwardly extending vertical post 210 having a pair of cutouts 211, 212 formed on each side of the vertical post, as best seen in Figure 16. In the illustrated version, the frame sidewalls are hollow and are configured to receive within the hollow interior the left and right selector uprights defining the channels as described above. The channels 152, 153 face inward and are accessible through the cutouts 211, 212. The first cutout 212 is sized to receive the first vertical blade frame 170, allowing for vertical movement of the frame within the cutout. The vertical edges of the cutout (one of which is on the post 210) prevent movement of the blade frame 70 in a forward or rearward direction. Similarly, the second cutout 210 receives the second blade frame 171, trapping it in position to allow vertical but not longitudinal movement. Accordingly, movement of the selector causes movement of the blade frames 170, 171 within the channels without longitudinal movement of the frames 170, 171 because they are constrained by the cutouts 211, 212 formed in the frame sidewalls. As a result, movement of the selector with respect to the blade frames causes vertical movement of the blade frames, depending on the location of the frames in the channels as described above.

The pusher 120 includes an upper pusher grip having a number of spikes extending through a pusher core. The core terminates in a plate 124 that extends through a pusher frame having a lower flange 121 to protect the user from contacting the blade.

The spikes 126 are embedded in the pusher grip 127, and in the illustrated version four spikes 126 are provided. The spikes are preferably formed from metal and are elongated to firmly retain a food item within the pusher frame. The pusher plate 124 includes a series of holes 128 positioned to receive the spikes so that the spikes can extend through the pusher plate.

The pusher core includes a central post 119 terminating in a pusher top 125, with the pusher central post being vertically moveable through the pusher grip 127. In a vertically raised position the spikes 126 are exposed through the pusher plate 124, allowing the spikes to readily poke into a food item The pusher plate 124 may further include a number of short spikes integrally formed with the pusher plate.

As the pusher top and pusher core are pressed downward it urges the food item onto the platen and through the pusher. After extended slicing the pusher core moves downward to the bottom of the pusher frame.

In one version of the invention, the pusher frame includes an arch 122a, 122b at the leading and trailing edges. The arch is configured to allow the pusher frame to grasp an elongated food item such as a carrot, positioned lengthwise through the arches. Each of the arches may further include a number of short spikes 123 extending downward from the arches.

In use, the platen may be raised or lowered to a desired height, thereby selecting a desired cutting thickness by lowering the platen beneath the main blade. As noted above, the platen lowers in a vertical manner, rather than inclining, thereby producing less binding when slicing. Also as desired, the blade frame may be rotated to choose either of the two blades. The julienne and fry blades may also be raised or retracted to allow for standard cutting or cutting with additional julienne or fry stripping.

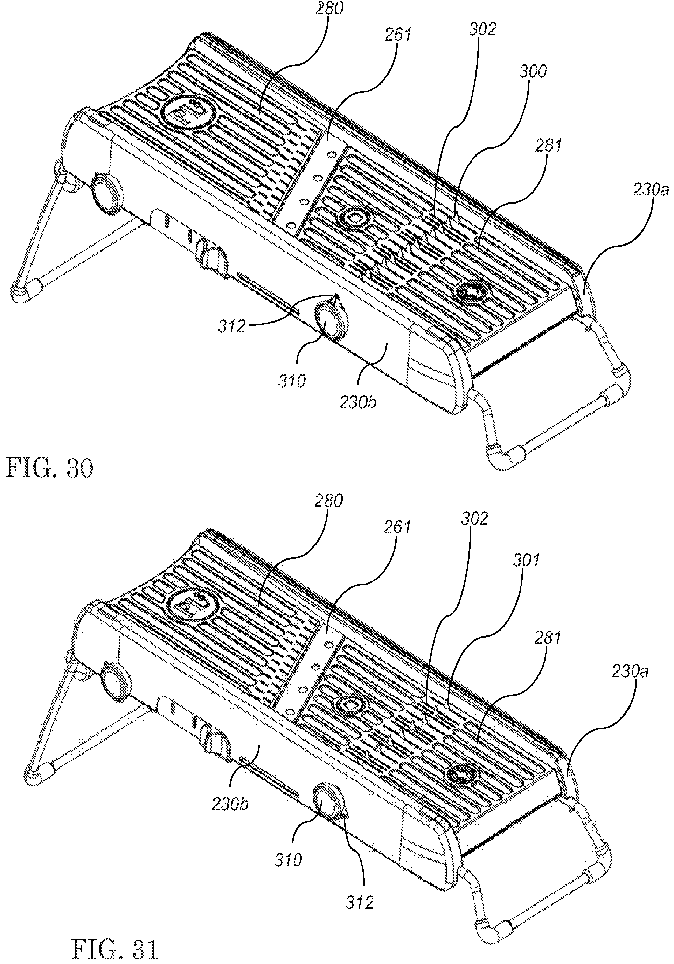

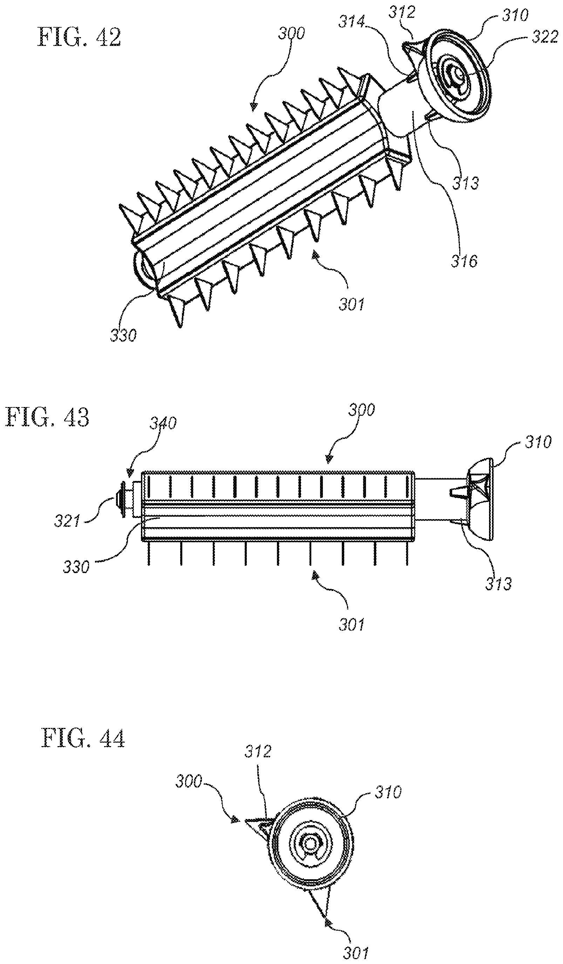

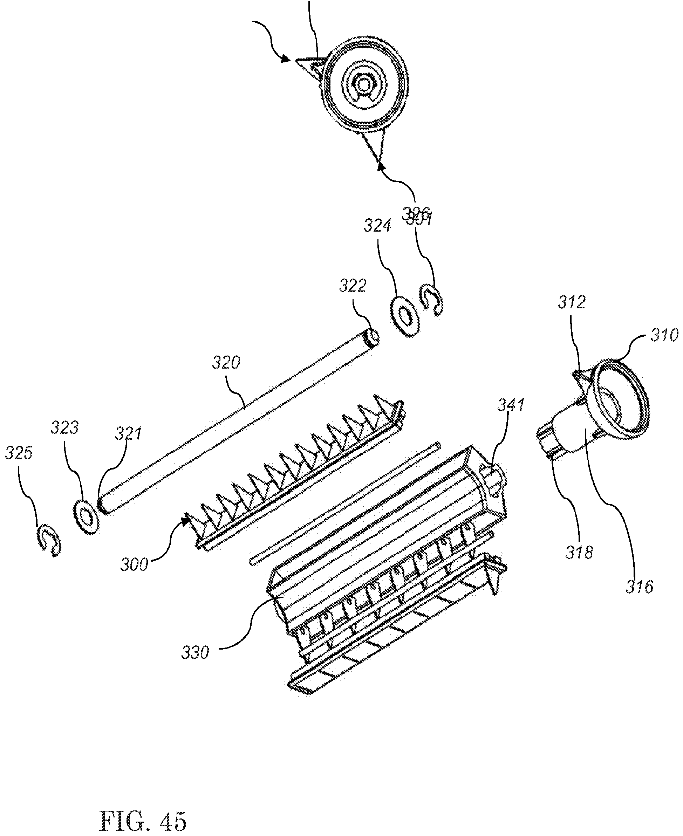

The madoline of the invention incorporates a set of cubing blades, such as illustrated in a further preferred embodiment in Figures 30-45. Figure 30 illustrates an alternate preferred mandolin slicer having a frame with left and right frame sidewalls 230a, 230b. A movable platen 280 is positioned between the frame sidewalls to allow a food item to be guided along the platen toward a main slicing blade 261. A runout plate 281 is positioned at a distal end of the slicer, such that the main slicing blade is positioned between the proximal end and the distal end of the slicer. A series of cubing blade slots 302 is positioned in the runout plate, with the slots being configured to allow a plurality of cubing blades to extend vertically through the cubing blade slots. In the illustrated example of Figure 30, a first set of cubing blades 300 is shown in an extended position in which the blades extend perpendicularly to the runout plate and through the series of cubing blade slots 302 arranged parallel to one another between the left and right frame sidewalls. In one version, the first set of cubing blades 300 are relatively close together for a relatively small cube to be produced by slicing a food item with the cubing blades. A knob 310 positioned on the cubing blade assembly (see Figures 42-45) extends through an opening formed in the right frame sidewall 230b, as described in greater detail below. The knob preferably includes an indicator 312 providing a visual indication of the selection of cubing blade options.

Figure 31 illustrates the slicer of Figure 30, but with a second set of cubing blades 301 extending through the series of cubing blade slots 302. Likewise, the first set of cubing blades 300 has been retracted below the runout plate in Figure 31. Thus, in the illustrated example the slicer includes at least two sets of cubing blades. In other versions a single set of cubing blades may be provided, or more than two sets may be provided. In Figure 30, the indicator 312 is pointing in a vertical position, while in Figure 31 the indicator is rotated 90 degrees in a clockwise direction from the position in Figure 30.

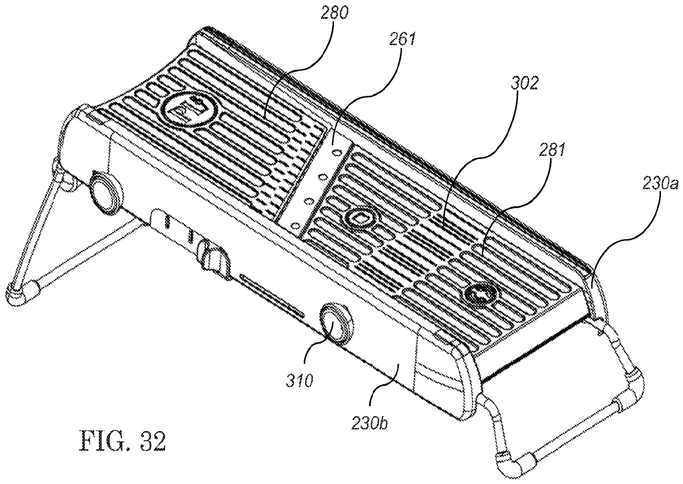

Figure 32 illustrates the slicer of Figure 30, but with both the first and second set of cubing blades in a retracted position, beneath the runout plate.

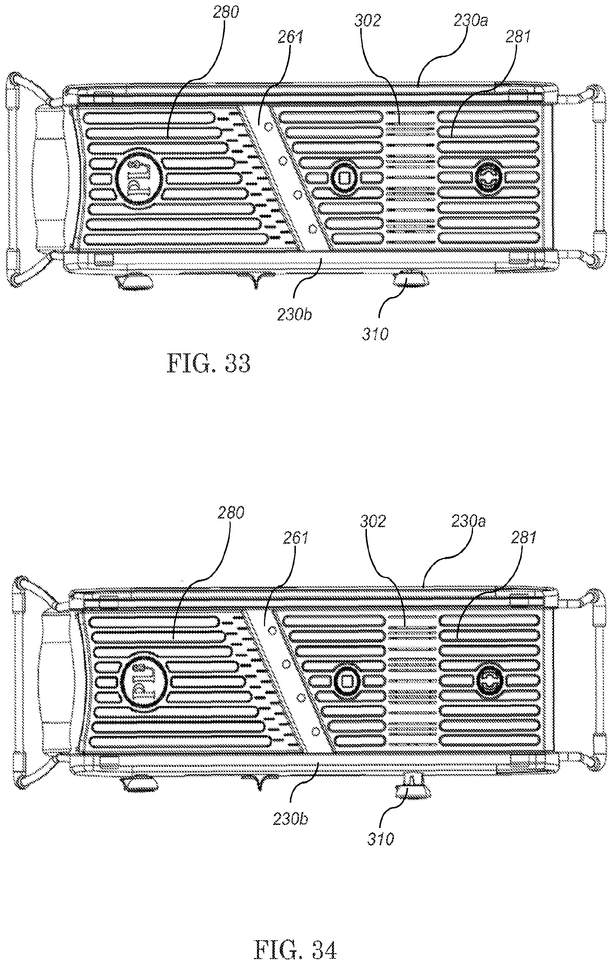

Figures 33 and 34 are top plan views of the slicer of Figure 30, highlighting the position of the cubing selector knob 310 in its locked position in Figure 33, and in an extended position in Figure 34 in which one or more protrusions has been removed from corresponding slots (as described further below) so that the knob and the cubing blade assembly may be rotated as desired.

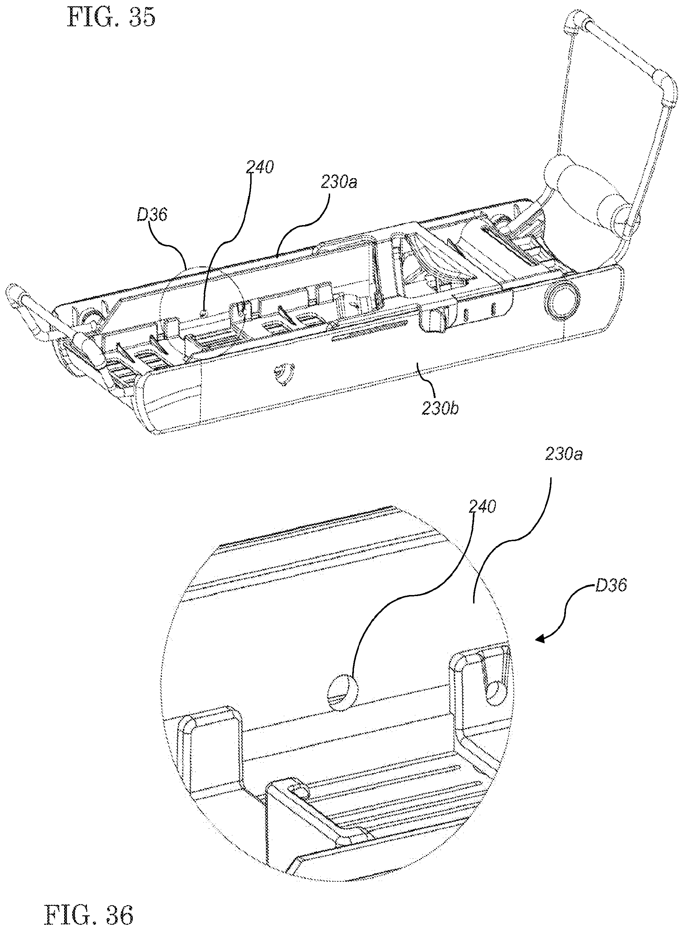

Figure 35 is a bottom perspective view of the slicer of Figure 30, with the cubing blade selector removed and highlighting the interior portion of the left frame sidewall 230a. As described above, most preferably the sidewall is formed with in inner and outer surface defining an interior cavity. Detail D36 is indicated by a circle in Figure 35, and is shown in a close-up view in Figure 36. The interior portion of the left frame sidewall 230a includes a hole 240 configured to receive a portion of an axle for supporting the cubing blade assembly, as discussed below.

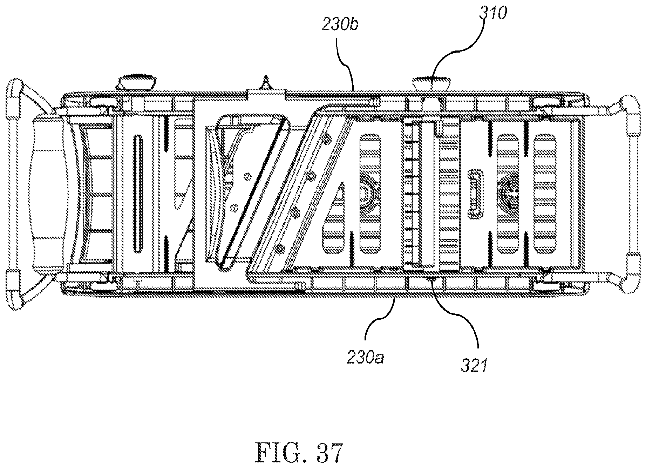

Figure 37 is a bottom plan view of the slicer of Figure 30, illustrating the cubing blade selector knob 310 extending beyond the right frame sidewall 230b and a first end 321 of the selector assembly axle extending into the interior cavity of the left frame sidewall 230a.

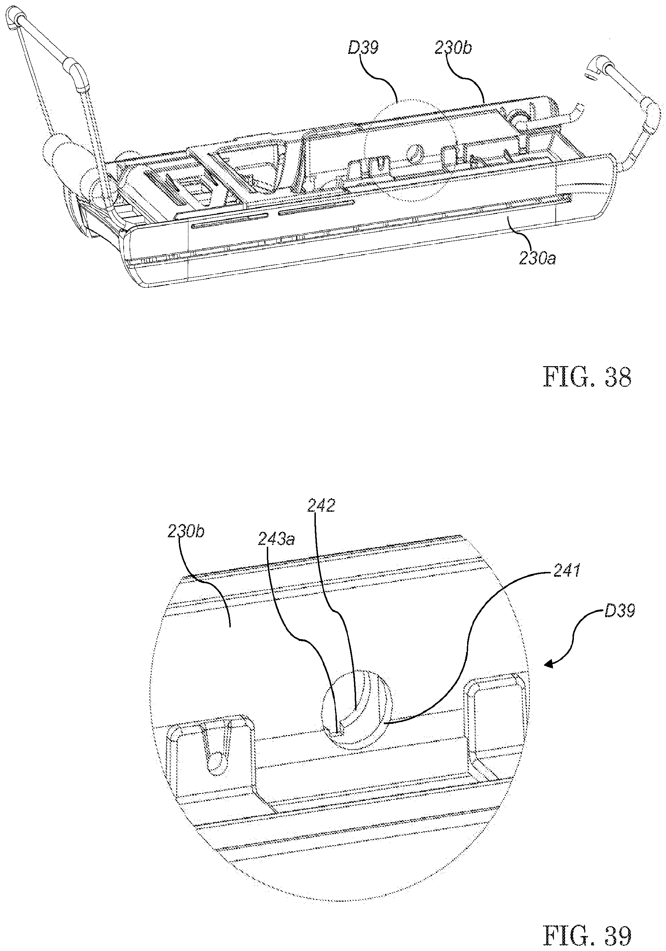

Figure 38 is a bottom perspective view of the slicer of Figure 30, with the cubing blade selector removed and highlighting the interior portion of the right frame sidewall 230b. Detail D39 is indicated by a circle in Figure 38 and is shown in close-up view in Figure 39. As with the left frame sidewall, the right frame sidewall is preferably formed with inner and outer surfaces defining an interior cavity. On the inner sidewall surface, an inner circular hole 241 is formed, while in the outer sidewall surface an outer circular hole 242 is formed. Preferably, one of the inner or outer holes is formed with one or more notches, e.g. 243a, to receive protrusions formed on the selector knob to lock the cubing blade assembly in a desired position. In the illustrated example, the notches are formed in the outer hole 242.

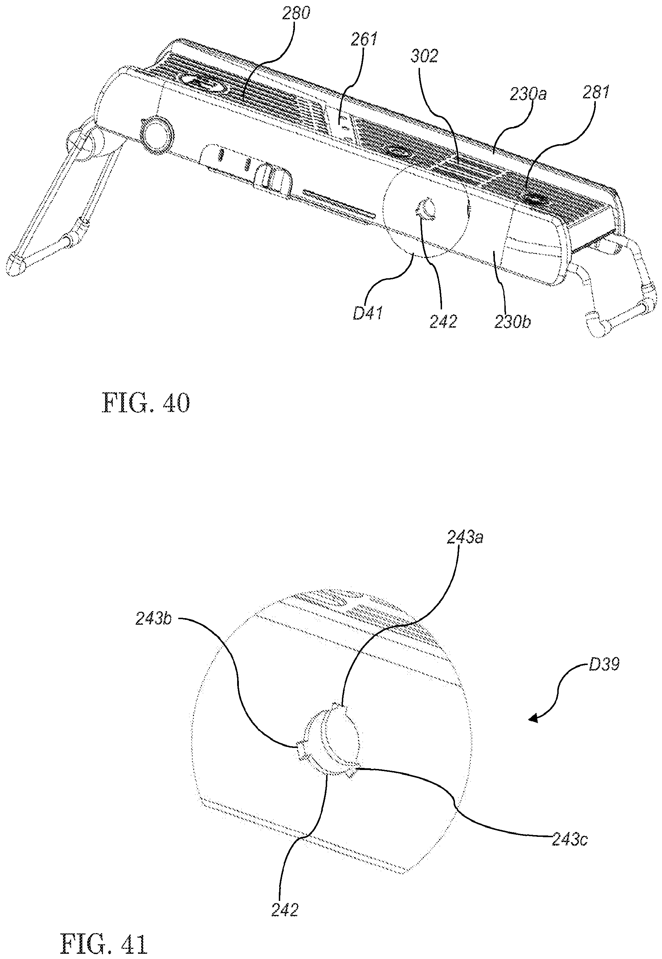

Figure 40 is a perspective view of the slicer of Figure 30, with the cubing blade assembly removed and including a circle indicating detail D41. Figure 41 shows a close-up view of detail D41. The outer circular hole 242 formed in the right frame sidewall 230b is preferably formed with three notches 243a, 243b, 243c, as illustrated in Figures 40 and 41.

Figures 42-45 illustrate a preferred blade assembly, which includes a blade assembly body 330 carried on a center axle 320 having a first end 321 and a second end 322. The axle is received within a central axial bore formed in the blade assembly body. In the illustrated version, a washer 323 is secured to the first end 321 of the axle 320 by a clip 325. Another washer 32 is secured to the second end 322 of the axle 320 by another clip 326. The second end of the axle extends into the interior of the selector knob, in which a coil spring (not illustrated) is trapped between the washer 324 and an interior shelf formed within the knob 310.

The main body 330 is configured to mount a first set of blades 300 and, in the illustrated example, a second set of blades 301. Most preferably the first set of blades contains a larger number of blades that are spaced more closely together than the relatively fewer blades in the second set of blades, which are spaced farther apart. Accordingly, the first set of blades will slice a food item into smaller cubes than the second set of blades.

At the first end of the cubing blade assembly, a short length of the axle 320 extends between an end of the main body 330 and the first washer, defining a gap 340. This short length of the axle is carried on the left sidewall frame 230a, supported within the hole 240, such that the washer 323 and the main body 330 retain the cubing blade assembly in position and substantially prevent moment of the cubing blade assembly in an axial direction (that is, a direction along the axis defined by the axle 320). At the same time, the cubing blade assembly is mounted for rotational movement about the axis defined by the axle.

The cubing blade selector knob 310 includes a stem 316 which terminates in a splined section 318. The main body 330 is formed with a complementary interior opening having a series of grooves that receive the splines to lock the selector knob within the main body to prevent rotational movement of the knob with respect to the main body. At the same time, the knob 310 is configured to allow axial movement of the splined portion of the stem into and out of the main body. The second washer 324 trapped within the knob serves to limit the amount of axial movement of the knob with respect to the main body, while the interior coil spring is positioned between the second washer and the main body in order to urge the knob toward the main body.

The stem 316 of the knob is received within the holes 241, 242 formed in the right frame sidewall 230b in order to secure the blade assembly to the frame. A portion of the stem 316 axially outward from the splined portion of the knob includes one or more protrusions 313, 314 extending radially outward from the stem The protrusions are sized and positioned to be received within the notches 243a, 243b, 243c formed in the outer sidewall hole 242. Accordingly, the protrusions and notches cooperate to prevent rotational movement of the knob, and therefore the axle and cubing blade assembly, when the protrusions are engaged within the notches.

In order to rotate the cubing blade assembly, the selector knob 310 is pulled outward, from its locked position as seen in Figure 33 to its unlocked position shown in Figure 34. This movement compresses the coil spring within the stem of the knob, and allows the axle and cubing blade assembly to be rotated. As desired by a user, the preferred version of the blade assembly may be rotated to positions in which all cubing blades are retraced, only the first set of cubing blades is extended, or only the second set of cubing blades is extended. Once rotated to the desired position, the knob is released and pulled back into position by the coil spring so that the notches and protrusions lock the cubing blade assembly in its selected position.

In one version of the invention, the individual blades in the sets of cubing blades are sharpened on two opposing sides, including an edge facing toward the proximal end of the slicer and an edge facing toward the distal end of the slicer. Consequently, the cubing blades are configured to cut when a food item is moved in either direction, either toward the distal end or toward the proximal end of the slicer.

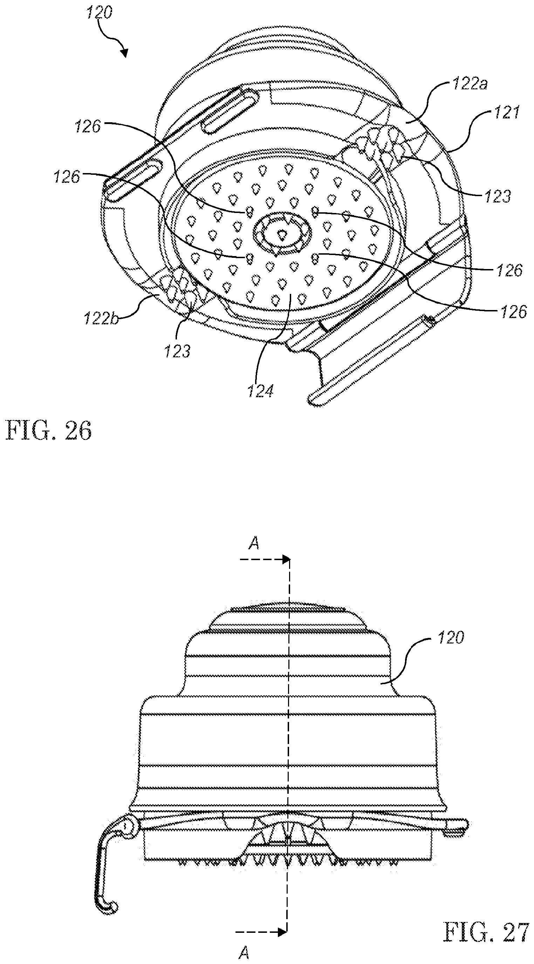

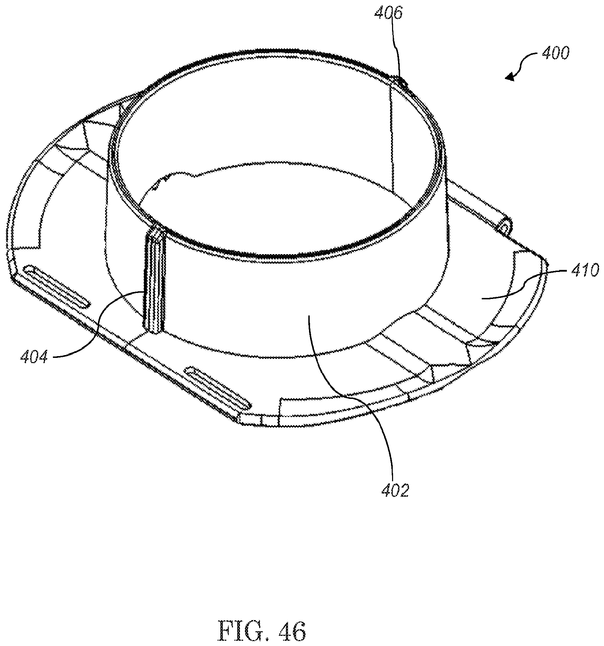

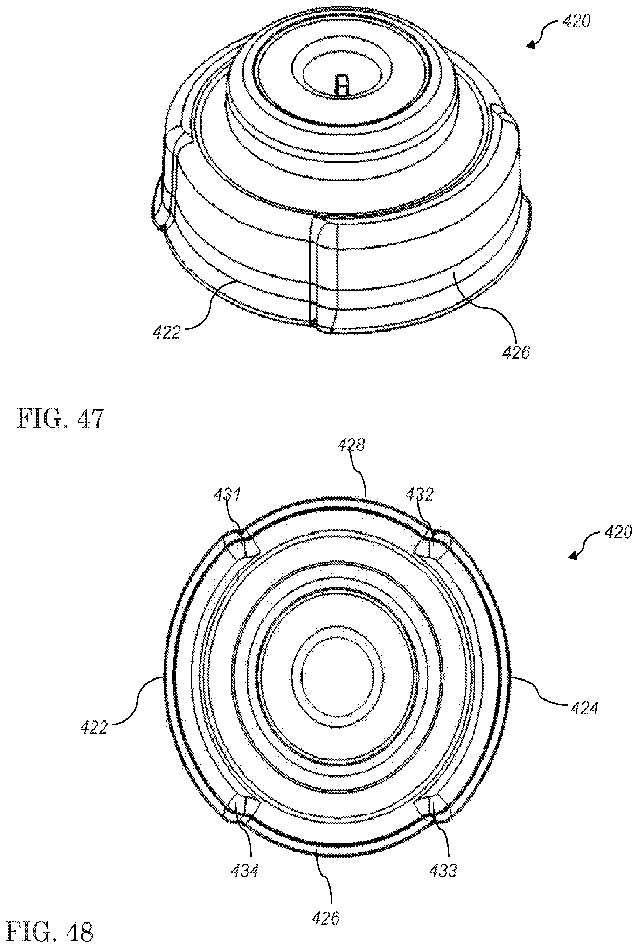

Preferred pusher assembly components for use with a version having a set of cubing blades are illustrated in Figures 46 through 48. Most preferably, the pusher is configured as described and illustrated in Figures 26-29, but with differences as shown in Figures 46-48 and described below.

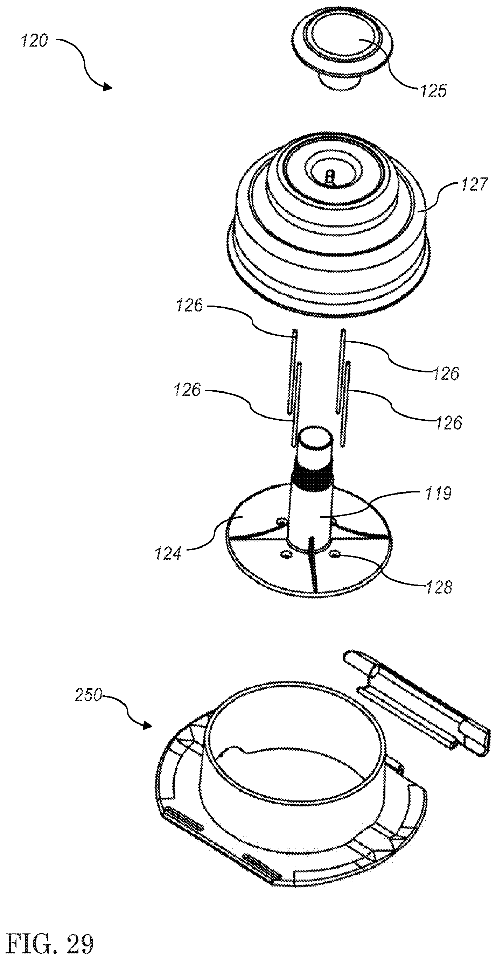

The pusher assembly for use with a cubing version includes a pusher housing 400, generally configured as with the pusher housing 250 as illustrated in Figure 29. The cubing pusher housing 400 includes a cylindrical support 402, as with the standard pusher, but it further includes a pair of diametrically opposed stops 404, 406 positioned on exterior sidewalls of the cylindrical support. As illustrated, the stops 404, 406 are preferably configured as axial tabs extending vertically along the height of the cylindrical support 402.

A pusher grip 420 is configured to be supported by the cylindrical support 402, in which the cylindrical support 402 is received within a complementary cylindrical interior cavity within the pusher grip 420. The pusher grip is configured with four sidewall sections, including a first pair of opposing sidewall sections 422, 424 and a second pair of opposing sidewall sections 426, 428, in which the first pair is positioned between the second pair. The first pair of sidewall sections is configured with a shorter interior diameter separating the sidewall sections than the length of the diameter separating the second pair of sidewall sections. The sidewall sections transition between one another to provide four abutments 431, 432, 433, 434 spaced about the generally cylindrical sidewall at 90 degree intervals and along an interior surface of the pusher grip 420. The abutments are sized to engage the stops 404, 406, such that the pusher grip may rotate axially atop the pusher housing but only for a rotational distance of 90 degrees. At that point the abutments engage the stops and further rotational travel is impeded. Although not illustrated in Figures 46-48, the pusher preferably also includes a pusher core and pusher plate as described above.

In use, a food item is preferably attached to the pusher plate and positioned to be moved along the platen and runout plate for slicing or cubing. If cubing is desired, the cubing knob 310 is pulled out and rotated to extend the desired set of cubing blades above the surface of the runout plate. The pusher and food item are moved over the runout plate, first in a direction from the proximal end toward the distal end of the slicer, causing the food item to be sliced by the set of cubing blades. The pusher grip is then rotated 90 degrees with respect to the pusher housing, thereby moving the food item 90 degrees because the food item is firmly grasped by the spikes or otherwise by the pusher plate as described above. The pusher is then moved in the opposite direction, toward the proximal end of the slicer, causing the food item to be sliced by the cubing blades again but in a cutting action that is perpendicular to the first cutting described above. At this point, the pusher should be positioned on the platen. Finally, the pusher is again moved from the proximal end and the platen toward the distal end, where the food item encounters the main slicing blade which will cut the food item into cubes. These steps may then be repeated to produce as many cubes as are desired.

While the preferred embodiment of the invention has been illustrated and described, as noted above, many changes can be made within the scope of the claims.

## Claims

1. A mandoline slicer, comprising:
a frame having a pair of opposing frame sidewalls (230a, 230b);
a platen (280) forming a slicing ramp at a proximal portion of the slicer and carried on the frame between the pair of opposing frame sidewalls (230a, 230b), the platen (280) having a proximal end and a distal end;
a runout plate (281) positioned at a distal portion of the slicer and between the opposing frame sidewalls, the runout plate (281) having a main blade (261) positioned adjacent the platen (280), the distal end of the platen (280) being moveable to a plurality of positions to define a plurality of cutting thicknesses between the distal end of the platen (280) and the main blade (261), the platen (280) having a plurality of julienne blade slots (302) arranged in a row and positioned between the main blade (261) and the proximal end of the slicer;
a julienne blade assembly supported between the pair of opposing frame sidewalls (230a, 230b) and below an upper surface of the platen (280), the julienne blade assembly having a first set of julienne blades (81) held in a frame (170) with pegs positioned in a first channel (152) and a complementary second channel formed on opposite side of a fry/julienne selector (151) and configured to be selectively movable between a deployed position in which the first set of julienne blades extends through at least some of the plurality of julienne blade slots (302), and a stowed position in which the first set of julienne blades is retracted below the upper surface of the platen (280), and a second set of julienne blades held in a frame (171) with pegs positioned in a third channel (153) and a complementary fourth channel formed on opposite side of the fry/selector (151) and deployable once the first set of julienne blades are deployed, the second set of julienne blades configured to be selectively movable between a deployed position in which the second set of julienne blades extends through at least some of the plurality of julienne blade slots (302), and a stowed position in which the second set of julienne blades is retracted below the upper surface of the platen (280);
the fry/julienne selector (151) allowing for the user to selectively raise either the first or both sets of julienne blades to control the width of the food item cut by the julienne blades;
the mandoline slicer **characterized in that** it further comprises:
the runout plate (281) further having a plurality of cubing blade slots (302) formed between the main blade and the distal end of the slicer; and
a cubing blade assembly supported between the pair of opposing frame sidewalls (230a, 230b) and below an upper surface of the runout plate (281), the cubing blade assembly having a first set of cubing blades (300) configured to be selectively movable between a first position in which the first set of cubing blades (300) extends through at least some of the plurality of cubing blade slots (302), and a second position in which the first set of cubing blades (300) is retracted below the upper surface of the runout plate;
a first selector knob (310) positioned on one of the opposing frame sidewalls (230a, 230b) and connected to the cubing blade assembly and operable to move the first set of cubing blades (300) between the first position and the second position;
and
a second selector knob (150) positioned on one of the opposing frame sidewalls, the second selector knob being connected to the julienne blade assembly and operable to move the first set of julienne blades and the second set of julienne blades between the deployed position and the stowed position;
whereby the first set of cubing blades (300) is movable between the first and second positions independently of the movement of the movement of the first set of julienne blades (81) between the stowed and deployed positions.

2. The mandoline slicer of claim 1, wherein the first set of cubing blades (300) each further includes a first sharp edge facing toward the proximal end of the slicer, and a second sharp edge facing toward the distal end of the slicer, wherein when a food item is moved across the first set of cubing blades (300) toward the distal end of the slicer the food item is cut by the first sharp edge, and when the food item is rotated 90 degrees on the platen (280) and moved across a second set of cubing blades (301) toward the proximal end of the slicer the food item is cut by the second sharp edge.

3. The mandoline slicer of claim 2, further comprising a pusher (120) attachable to one of the opposing frame sidewalls (230a, 230b), the pusher having a pusher support (402), a pusher grip (420) defining an interior cavity and surrounding the pusher support (402), a pusher plate (124) vertically moveable within the interior cavity, wherein the first set of cubing blades (300), when extended through the cubing blade slots (302), are positioned on the runout plate (281) such that the pusher grip (420) is rotatable on the runout plate (281) between the first set of cubing blades (300) and the distal end of the slicer.

4. The mandoline slicer of any of claims 1-3, wherein the cubing blade assembly further comprises the second set of cubing blades (301) configured to be selectively movable between the second position in which the second set of cubing blades (301) extends through at least some of the plurality of cubing blade slots (302), and a third position in which the first set of cubing (300) blades and the second set of cubing blades are retracted below the upper surface of the runout plate (281).

5. The mandoline slicer of claim 4, wherein the first selector knob (310) is movable between a locked position and an unlocked position, the cubing blade assembly being movable between the first position, the second position, and the third position when the selector knob (310) is in the unlocked position.

6. The mandoline slicer of claim 4, wherein the pusher further comprises a plurality of downwardly-depending spikes (126) mounted within the pusher grip (420) and extending through the pusher plate (124), whereby the pusher plate is vertically moveable with respect to both the pusher grip (420) and the spikes.

7. The mandoline slicer of claim 6, wherein the pusher grip (420) is rotatable with respect to the pusher support (402), and further wherein the pusher grip (420) and pusher support (402) comprise complementary abutting surfaces to limit the rotational path of travel to 90 degrees.

8. The mandoline slicer of claim 7, wherein the complementary abutting surfaces comprise a plurality of abutments formed on an interior surface of the pusher grip (420) within the pusher grip cavity, and a pair of diametrically opposing stops (402, 406) formed on an outer surface of the pusher support (402).

9. The mandoline slicer of claim 4, wherein a platen support (182) includes a pair of opposing left and right legs at the rearward end, each having outwardly extending rear tabs (183a, 183b), and a pair of opposing left and right legs at the forward end, each having outwardly extending forward tabs (184a, 184b), each tab engaging the frame to restrict the platen support (182) against longitudinal movement.

10. The mandoline slicer of claim 5, wherein the frame comprises a first pair of opposing grooves (133, 134) and a second pair of opposing grooves, each one of the tabs in the pair of outwardly extending forward tabs (184a, 184b) and the pair of outwardly extending rearward tabs (183a, 183b) being received in a corresponding one of the grooves from among the first pair of opposing grooves (133, 134) and a second pair of opposing grooves.

11. The method of using the mandoline slicer of claim 1 comprising:
attaching a food item to a pusher plate (124) carried on a pusher (120);
moving the food item and pusher (120) across the runout plate (281) in a direction from the proximal end toward the distal end of the slicer, causing the food item to be sliced by the first set of cubing blades (300);
rotating the pusher (120) 90 degrees, thereby moving the food item 90 degrees;
moving the food item and the pusher (120) in a direction from the distal end toward the proximal end of the slicer, causing the food item to be sliced again by the first set of cubing blades (300), and to pass over the main blade (261); and
moving the food item and the pusher (120) in a direction from the proximal end of the slicer toward the distal end of the slicer, wherein the food item encounters the main blade (261) which will cut the food item into cubes.

12. The method of claim 11, further comprising rotating the first selector knob (310) to select the first position for the cubing blade assembly.

## Patentansprüche

1. Gemüsehobel, der Folgendes umfasst:
einen Rahmen, der ein Paar von gegenüberliegenden Rahmenseitenwänden (230a, 230b) aufweist;
eine Platte (280), die eine Hobelrampe an einem proximalen Abschnitt des Gemüsehobels ausbildet, und auf dem Rahmen zwischen dem Paar von gegenüberliegenden Rahmenseitenwänden (230a, 230b) getragen wird, wobei die Platte (280) ein proximales Ende und ein distales Ende aufweist;
eine Auslaufplatte (281), die an einem distalen Abschnitt des Gemüsehobels und zwischen den gegenüberliegenden Rahmenseitenwänden angeordnet ist, wobei die Auslaufplatte (281) eine Hauptklinge (261) aufweist, die benachbart zu der Platte (280) angeordnet ist, wobei das distale Ende der Platte (280) in eine Vielzahl von Positionen bewegbar ist, um eine Vielzahl von Schneiddicken zwischen dem distalen Ende der Platte (280) und der Hauptklinge (261) zu definieren, wobei die Platte (280) eine Vielzahl von Julienne-Klingenschlitzen (302) aufweist, die in einer Reihe angeordnet und zwischen der Hauptklinge (261) und dem proximalen Ende des Gemüsehobels angeordnet sind;
eine Julienne-Klingenanordnung, die zwischen dem Paar von gegenüberliegenden Rahmenseitenwänden (230a, 230b) und unter einer oberen Fläche der Platte (280) gelagert ist, wobei die Julienne-Klingenanordnung einen ersten Satz von Julienne-Klingen (81), der in einem Rahmen (170) mit Stiften gehalten wird, die in einem ersten Kanal (152) und einem komplementären zweiten Kanal angeordnet sind, der auf einer gegenüberliegenden Seite eines Brat-/Julienne-Auswahlelements (151) ausgebildet und ausgelegt ist, um selektiv zwischen einer ausgefahrenen Position, in der sich der erste Satz von Julienne-Klingen durch zumindest manche aus der Vielzahl von Julienne-Klingenschlitzen (302) erstreckt, und einer zurückgezogenen Position, in der der erste Satz von Julienne-Klingen unter die obere Fläche der Platte (280) zurückgezogen ist, bewegbar ist, und einen zweiten Satz von Julienne-Klingen umfasst, der in einem Rahmen (171) mit Stiften gehalten wird, die in einem dritten Kanal (153) und einem komplementären vierten Kanal angeordnet sind, der auf einer gegenüberliegenden Seite eines Brat-/Julienne-Auswahlelements (151) ausgebildet und ausfahrbar ist, wenn der erste Satz von Julienne-Klingen ausgefahren ist, wobei der zweite Satz von Julienne-Klingen ausgelegt ist, um selektiv zwischen einer ausgefahrenen Position, in der sich der zweite Satz von Julienne-Klingen durch zumindest manche der Vielzahl von Julienne-Klingenschlitzen (302) erstreckt, und einer zurückgezogenen Position, in der der zweite Satz von Julienne-Klingen unter die obere Fläche der Platte (280) zurückgezogen ist, bewegbar ist;
wobei das Brat-/Julienne-Auswahlelement (151) ermöglicht, dass der Benutzer entweder den ersten oder beide Sätze von Julienne-Klingen anhebt, um die Breite des Lebensmittels, das durch die Julienne-Klingen zu schneiden ist, zu steuern;
wobei der Gemüsehobel **dadurch gekennzeichnet ist, dass** er ferner Folgendes umfasst:
die Auslaufplatte (281), die ferner eine Vielzahl von würfelnden Klingenschlitzen (302) aufweist, die zwischen der Hauptklinge und dem distalen Ende des Gemüsehobels ausgebildet ist; und
eine würfelnde Klingenanordnung, die zwischen dem Paar von gegenüberliegenden Rahmenseitenwänden (230a, 230b) und unter einer oberen Fläche der Auslaufplatte (281) gelagert ist, wobei die würfelnde Schneidklingenanordnung einen ersten Satz von würfelnden Klingen (300), die ausgelegt sind, um selektiv zwischen einer ersten Position, in der sich der erste Satz von würfelnden Klingen (300) durch zumindest manche aus der Vielzahl von würfelnden Klingenschlitzen (302) erstreckt, und einer zweiten Position, in der der erste Satz von würfelnden Klingen (300) unter die obere Fläche der Auslaufplatte zurückgezogen ist, bewegbar ist;
einen ersten Auswahlelementknopf (310), der auf einer der gegenüberliegenden Rahmenseitenwände (230a, 230b) angeordnet und mit der würfelnden Klingenanordnung verbunden ist und einsetzbar ist, um den ersten Satz von würfelnden Klingen (300) zwischen der ersten Position und der zweiten Position zu bewegen; und
einen zweiten Auswahlelementknopf (150), der auf einer der gegenüberliegenden Rahmenseitenwände angeordnet ist, wobei der zweite Auswahlelementknopf mit der Julienne-Klingenanordnung verbunden ist und einsetzbar ist, um den ersten Satz von Julienne-Klingen und den zweiten Satz von Julienne-Klingen zwischen der ausgefahrenen Position und der zurückgezogenen Position zu bewegen;
wodurch der erste Satz von würfelnden Klingen (300) unabhängig von der Bewegung des ersten Satzes von Julienne-Klingen (81) zwischen der zurückgezogenen und der ausgefahrenen Position zwischen der ersten und der zweiten Position bewegbar ist.

2. Gemüsehobel nach Anspruch 1, wobei der erste Satz von würfelnden Klingen (300) jeweils ferner eine erste scharfe Kante, die dem proximalen Ende des Hobels zugewandt ist, und eine zweite scharfe Kante umfasst, die dem distalen Ende des Hobels zugewandt ist, wobei, wenn ein Lebensmittel über den ersten Satz von würfelnden Klingen (300) in Richtung des distalen Endes des Hobels bewegt wird, das Lebensmittel durch die erste scharfe Kante geschnitten wird, und wenn das Lebensmittel um 90 Grad auf der Platte (280) gedreht und über einen zweiten Satz von würfelnden Klingen (301) in Richtung des proximalen Endes des Hobels bewegt wird, das Lebensmittel durch die zweite scharfe Kante geschnitten wird.

3. Gemüsehobel nach Anspruch 2, der ferner einen Schieber (120) umfasst, der an einer der gegenüberliegenden Rahmenseitenwände (230a, 230b) anbringbar ist, wobei der Schieber einen Schieberträger (402), einen Schiebergriff (420), der einen inneren Hohlraum definiert und den Schieberträger (402) umgibt, eine Schieberplatte (124), die innerhalb des inneren Hohlraums vertikal beweglich ist, wobei der erste Satz von würfelnden Klingen (300), wenn sie durch die würfelnden Klingenschlitze (302) ausgefahren sind, so auf der Auslaufplatte (281) angeordnet sind, dass der Schiebergriff (420) auf der Auslaufplatte (281) zwischen dem ersten Satz von würfelnden Klingen (300) und dem distalen Ende des Hobels drehbar ist.

4. Gemüsehobel nach einem der Ansprüche 1 bis 3, wobei die würfelnde Klingenanordnung ferner den zweiten Satz von würfelnden Klingen (301) umfasst, der ausgelegt ist, um zwischen der zweiten Position, in sich der der zweite Satz von würfelnden Klingen (301) durch zumindest manche aus der Vielzahl von würfelnden Klingenschlitzen (302) erstreckt, und einer dritten Position, in der der erste Satz von würfelnden Klingen (300) und der zweite Satz von würfelnden Klingen unter die obere Fläche der Auslaufplatte (281) zurückgezogen ist, selektiv beweglich zu sein.

5. Gemüsehobel nach Anspruch 4, wobei der erste Auswahlelementknopf (310) zwischen einer verriegelten Position und einer nicht verriegelten Position bewegbar ist, wobei die würfelnde Klingenanordnung zwischen der ersten Position, der zweiten Position und der dritten Position beweglich ist, wenn sich der Auswahlelementknopf (310) in der nicht verriegelten Position befindet.

6. Gemüsehobel nach Anspruch 4, wobei der Schieber ferner eine Vielzahl von nach unten abhängenden Zacken (126) umfasst, die innerhalb des Schiebergriffs (420) angebracht sind und sich durch die Schieberplatte (124) erstrecken, wodurch die Schieberplatte in Bezug auf den Schiebergriff (420) sowie die Zacken vertikal bewegbar ist.

7. Gemüsehobel nach Anspruch 6, wobei der Schiebergriff (420) in Bezug auf den Schieberträger (402) drehbar ist und wobei der Schiebergriff (420) und der Schieberträger (402) ferner komplementär anliegende Oberflächen umfassen, um den Drehweg auf 90 Grad zu beschränken.

8. Gemüsehobel nach Anspruch 7, wobei die komplementär anliegenden Oberflächen eine Vielzahl von Anlagen, die auf einer Innenfläche des Schiebergriffs (420) innerhalb des Schiebergriffhohlraums ausgebildet sind, und ein Paar von diametral entgegengesetzten Stoppern (402, 406) umfassen, die auf einer Außenfläche des Schieberträgers (402) ausgebildet sind.

9. Gemüsehobel nach Anspruch 4, wobei ein Plattenträger (182) ein Paar von gegenüberliegenden linken und rechten Beinen am hinteren Ende umfasst, von denen jedes sich nach außen erstreckende hintere Laschen (183a, 183b) und ein Paar von gegenüberliegenden linken und rechten Beinen am vorderen Ende umfasst, von denen jedes sich nach außen erstreckende vordere Laschen (184a, 184b) umfasst, wobei jede Lasche in den Rahmen eingreift, um den Plattenträger (182) gegen eine Längsbewegung einzuschränken.

10. Gemüsehobel nach Anspruch 5, wobei der Rahmen ein erstes Paar von gegenüberliegenden Rillen (133, 134) und ein zweites Paar von gegenüberliegenden Rillen umfasst, wobei jede einzelne der Rillen in dem Paar von sich nach außen erstreckenden vorderen Laschen (184a, 184b) und dem Paar von sich nach außen erstreckenden hinteren Laschen (183a, 813b) in einer entsprechenden der Rillen aus dem ersten Paar von gegenüberliegenden Rillen (133, 134) und einem zweiten Paar von gegenüberliegenden Rillen aufgenommen wird.

11. Verfahren zur Verwendung des Gemüsehobels nach Anspruch 1, umfassend:
Anbringen eines Lebensmittels auf einer Schieberplatte (124), die auf einem Schieber (120) getragen wird;
Bewegen des Lebensmittels und des Schiebers (120) über die Auslaufplatte (281) in eine Richtung vom proximalen Ende hin zum distalen Ende des Schiebers, wodurch bewirkt wird, dass das Lebensmittel durch den ersten Satz von würfelnden Klingen (300) geschnitten wird;
Drehen des Schiebers (120) um 90 Grad, wodurch das Lebensmittel um 90 Grad bewegt wird;
Bewegen des Lebensmittels und des Schiebers (120) in eine Richtung vom distalen Ende hin zum proximalen Ende des Schiebers, wodurch bewirkt wird, dass das Lebensmittel wiederum durch den ersten Satz von würfelnden Klingen (300) geschnitten wird und über die Hauptklinge (261) geführt wird; und
Bewegen des Lebensmittels und des Schiebers (120) in eine Richtung vom proximalen Ende des Schiebers hin zum distalen Ende des Schiebers, wobei das Lebensmittel auf die Hauptklinge (261) trifft, die das Lebensmittel in Würfel schneidet.

12. Verfahren nach Anspruch 11, das ferner das Drehen des ersten Auswahlelementknopfs (310) umfasst, um die erste Position für die würfelnde Klingenanordnung auszuwählen.

## Revendications

1. Trancheuse mandoline, comprenant :
un cadre présentant une paire de parois latérales de cadre opposées (230a, 230b) ;
un plateau (280) formant une rampe de tranchage au niveau d'une partie proximale de la trancheuse et porté sur le cadre entre la paire de parois latérales de cadre opposées (230a, 230b), le plateau (280) présentant une extrémité proximale et une extrémité distale ;
une plaque de battement (281) positionnée au niveau d'une partie distale de la trancheuse et entre les parois latérales de cadre opposées, la plaque de battement (281) présentant une lame principale (261) positionnée adjacente au plateau (280), l'extrémité distale du plateau (280) étant mobile vers une pluralité de positions pour définir une pluralité d'épaisseurs de coupe entre l'extrémité distale du plateau (280) et la lame principale (261), le plateau (280) présentant une pluralité de fentes de lame à julienne (302) agencées en une rangée et positionnées entre la lame principale (261) et l'extrémité proximale de la trancheuse ;
un ensemble de lames à julienne supporté entre la paire de parois latérales de cadre opposées (230a, 230b) et sous une surface supérieure du plateau (280), l'ensemble de lames à julienne présentant un premier ensemble de lames à julienne (81) maintenues dans un cadre (170) avec des chevilles positionnées dans un premier canal (152) et un deuxième canal complémentaire formé sur le côté opposé d'un sélecteur de frite/julienne (151) et configuré pour être sélectivement mobile entre une position déployée dans laquelle le premier ensemble de lames à julienne s'étend à travers au moins certaines de la pluralité de fentes de lame à julienne (302), et une position rangée dans laquelle le premier ensemble de lames à julienne est rétracté sous la surface supérieure du plateau (280), et un second ensemble de lames à julienne maintenu dans un cadre (171) avec des chevilles positionnées dans un troisième canal (153) et un quatrième canal complémentaire formé sur le côté opposé du sélecteur de frite/julienne (151) et déployable une fois que le premier ensemble de lames à julienne est déployé, le second ensemble de lames à julienne étant configuré pour être sélectivement mobile entre une position déployée dans laquelle le second ensemble de lames à julienne s'étend à travers au moins certaines de la pluralité de fentes de lame à julienne (302), et une position rangée dans laquelle le second ensemble de lames à julienne est rétracté sous la surface supérieure du plateau (280) ;
le sélecteur de frite/julienne (151) permettant à l'utilisateur de soulever sélectivement le premier ou les deux ensembles de lames à julienne pour commander la largeur du produit alimentaire coupé par les lames à julienne ;
la trancheuse mandoline étant **caractérisée en ce qu'**elle comprend en outre :
la plaque de battement (281) présentant en outre une pluralité de fentes de lame de découpage en cubes (302) formées entre la lame principale et l'extrémité distale de la trancheuse ; et
un ensemble de lames de découpage en cubes supporté entre la paire de parois latérales de cadre opposées (230a, 230b) et sous une surface supérieure de la plaque de battement (281), l'ensemble de lames de découpage en cubes présentant un premier ensemble de lames de découpage en cubes (300) configuré pour être sélectivement mobile entre une première position dans laquelle le premier ensemble de lames de découpage en cubes (300) s'étend à travers au moins certaines de la pluralité de fentes de lames de découpage en cubes (302), et une deuxième position dans laquelle le premier ensemble de lames de découpage en cubes (300) est rétracté sous la surface supérieure de la plaque de battement ;
un premier bouton de sélection (310) positionné sur l'une des parois latérales de cadre opposées (230a, 230b) et connecté à l'ensemble de lames de découpage en cubes et pouvant fonctionner pour déplacer le premier ensemble de lames de découpage en cubes (300) entre la première position et la deuxième position ; et
un second bouton de sélection (150) positionné sur l'une des parois latérales de cadre opposées, le second bouton de sélection étant connecté à l'ensemble de lames à julienne et pouvant être actionné pour déplacer le premier ensemble de lames à julienne et le second ensemble de lames à julienne entre la position déployée et la position rangée ;
moyennant quoi le premier ensemble de lames de découpage en cubes (300) est mobile entre les première et deuxième positions indépendamment du mouvement du mouvement du premier ensemble de lames à julienne (81) entre les positions rangée et déployée.

2. Trancheuse mandoline selon la revendication 1, dans laquelle le premier ensemble de lames de découpage en cubes (300) inclut en outre un premier bord tranchant tourné vers l'extrémité proximale de la trancheuse, et un second bord tranchant tourné vers l'extrémité distale de la trancheuse, dans laquelle lorsqu'un produit alimentaire est déplacé à travers le premier ensemble de lames de découpage en cubes (300) vers l'extrémité distale de la trancheuse, le produit alimentaire est découpé par le premier bord tranchant, et lorsque le produit alimentaire est tourné de 90 degrés sur le plateau (280) et déplacé à travers un second ensemble de lames de découpage en cubes (301) vers l'extrémité proximale de la trancheuse, le produit alimentaire est découpé par le second bord tranchant.

3. Trancheuse mandoline selon la revendication 2, comprenant en outre un poussoir (120) pouvant être fixé à l'une des parois latérales de cadre opposées (230a, 230b), le poussoir présentant un support de poussoir (402), une poignée de poussoir (420) définissant une cavité intérieure et entourant le support de poussoir (402), une plaque de poussoir (124) mobile verticalement à l'intérieur de la cavité intérieure, dans laquelle le premier ensemble de lames de découpage en cubes (300), lorsqu'il est étendu à travers les fentes de lame de découpage en cubes (302), est positionné sur la plaque de battement (281) de telle sorte que la poignée de poussoir (420) peut tourner sur la plaque de battement (281) entre le premier ensemble de lames de découpage en cubes (300) et l'extrémité distale de la trancheuse.

4. Trancheuse mandoline selon l'une quelconque des revendications 1 à 3, dans laquelle l'ensemble de lames de découpage en cubes comprend en outre le second ensemble de lames de découpage en cubes (301) configuré pour être sélectivement mobile entre la deuxième position dans laquelle le second ensemble de lames de découpage en cubes (301) s'étend à travers au moins certaines de la pluralité de fentes de lames de découpage en cubes (302), et une troisième position dans laquelle le premier ensemble de lames de découpage en cubes (300) et le second ensemble de lames de découpage en cubes sont rétractés en dessous de la surface supérieure de la plaque de sortie (281).

5. Trancheuse mandoline selon la revendication 4, dans laquelle le premier bouton de sélection (310) est mobile entre une position verrouillée et une position déverrouillée, l'ensemble de lames de découpage en cubes étant mobile entre la première position, la deuxième position et la troisième position lorsque le bouton de sélection (310) est dans la position déverrouillée.

6. Trancheuse mandoline selon la revendication 4, dans laquelle le poussoir comprend en outre une pluralité de pointes suspendues vers le bas (126) montées à l'intérieur de la poignée de poussoir (420) et s'étendant à travers la plaque de poussoir (124), moyennant quoi la plaque de poussoir est mobile verticalement par rapport à la fois à la poignée de poussoir (420) et aux pointes.

7. Trancheuse mandoline selon la revendication 6, dans laquelle la poignée de poussoir (420) peut tourner par rapport au support de poussoir (402), et en outre dans laquelle la poignée de poussoir (420) et le support de poussoir (402) comprennent des surfaces de butée complémentaires pour limiter le trajet de rotation de déplacement à 90 degrés.

8. Trancheuse mandoline selon la revendication 7, dans laquelle les surfaces de butée complémentaires comprennent une pluralité de butées formées sur une surface intérieure de la poignée de poussoir (420) à l'intérieur de la cavité de poignée de poussoir, et une paire de butées diamétralement opposées (402, 406) formées sur une surface extérieure du support de poussoir (402).

9. Trancheuse à mandoline selon la revendication 4, dans laquelle un support de plateau (182) inclut une paire de jambes gauche et droite opposées au niveau de l'extrémité arrière, chacune présentant des pattes arrière s'étendant vers l'extérieur (183a, 183b), et une paire de jambes gauche et droite opposées au niveau de l'extrémité avant, chacune présentant des pattes avant s'étendant vers l'extérieur (184a, 184b), chaque patte venant en prise avec le cadre pour restreindre le support de plateau (182) à l'encontre d'un déplacement longitudinal.

10. Trancheuse mandoline selon la revendication 5, dans laquelle le cadre comprend une première paire de rainures opposées (133, 134) et une seconde paire de rainures opposées, chacune des pattes de la paire de pattes avant s'étendant vers l'extérieur (184a, 184b) et de la paire de pattes arrière s'étendant vers l'extérieur (183a, 183b) étant reçues dans l'une correspondante des rainures parmi la première paire de rainures opposées (133, 134) et une seconde paire de rainures opposées.

11. Procédé d'utilisation de la trancheuse mandoline selon la revendication 1, comprenant les étapes consistant à :
fixer un produit alimentaire à une plaque de poussoir (124) portée par un poussoir (120) ;
déplacer le produit alimentaire et le poussoir (120) à travers la plaque de battement (281) dans une direction allant de l'extrémité proximale vers l'extrémité distale de la trancheuse, en amenant le produit alimentaire à être découpé par le premier ensemble de lames de découpage en cubes (300) ;
faire tourner le poussoir (120) sur 90 degrés, en déplaçant ainsi le produit alimentaire de 90 degrés ;
déplacer l'article alimentaire et le poussoir (120) dans une direction allant de l'extrémité distale vers l'extrémité proximale de la trancheuse, en amenant le produit alimentaire à être à nouveau découpé par le premier ensemble de lames de découpage en cubes (300), et à passer sur la lame principale (261) ; et
déplacer le produit alimentaire et le poussoir (120) dans une direction allant de l'extrémité proximale de la trancheuse vers l'extrémité distale de la trancheuse, dans lequel le produit alimentaire rencontre la lame principale (261) qui va découper le produit alimentaire en cubes.

12. Procédé selon la revendication 11, comprenant en outre une rotation du premier bouton de sélection (310) pour sélectionner la première position pour l'ensemble de lames de découpage en cubes.
